# EUROPEAN PATENT APPLICATION

(11) **EP 4 529 343 A1**
(43) Date of publication of application: **26.03.2025**
(21) Application number: 24803765.7
(22) Date of filing: 10.05.2024
(51) Int. Cl.: H04W 76/18, H04W 76/19, H04W 76/27, H04W 36/00, H04J 11/00

(54) **METHOD AND DEVICE FOR MOBILITY ROBUSTNESS OPTIMIZATION FOR VOICE FALLBACK IN NEXT GENERATION MOBILE COMMUNICATION SYSTEM**

(30) Priority: 11.05.2023 KR 20230060945
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR)
(74) Representative: Gulde & Partner
(86) International application number: PCT/KR2024/006320
(87) International publication number: WO 2024/232712

(57) **Abstract**

The present invention relates to a method and device for mobility robustness optimization for voice fallback in a next generation mobile communication system, and specifically, to an operation and device in which a terminal, when making an RF report, includes the ID of a cell to which the terminal reconnects and information about the time elapsed since the RLF.

## Description

### [Technical Field]

The disclosure relates to a method and device for optimizing mobility robustness for a voice fallback in a next generation mobile communication system and, particularly, to an operation and device for including the ID of a cell to which a terminal reconnects and information associated with a time that elapsed from an RLF, when making an RLF report.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

In the case in which a voice fallback is performed, since detailed information thereof is not included in RLF report information, an operator that manages base stations may have difficulty in optimizing a network, and thus the disclosure is to overcome the problem.

### [Technical Solution]

An operation method of a terminal in a wireless communication system according to an embodiment may include an operation of receiving, from an NR base station, a handover-from-NR command message including information in which a target radio access technology (RAT) is configured to LTE, an operation of selecting a suitable LTE cell when an available suitable LTE cell exists and selecting an acceptable LTE cell when an available suitable LTE cell does not exist in the case in which a failure of a handover from NR is detected, an operation of entering an RRC idle mode, an operation of performing an RRC connection establishment procedure with respect to the selected LTE cell, an operation of storing a time value from the handover failure to reconnection and an ID of the LTE cell to which the RRC connection is performed in VarRLF-Report associated with the NR when the LTE cell to which the RRC connection is performed is a suitable LTE cell, and an operation of storing a time value from the handover failure to reconnection in the VarRLF-Report associated with the NR when the LTE cell to which the RRC connection is performed is an acceptable LTE cell.

When the LTE cell to which the RRC connection is performed is an acceptable LTE cell, the ID of the LTE cell to which the RRC connection is performed may not be stored in the VarRLF-Report associated with the NR.

The handover-from-NR command message may include an indicator for a voice fallback.

The method of the terminal may further include an operation of storing, in the VarRLF-Report associated with the NR, information indicating that the handover is for a voice fallback.

The operation of storing the time value from the handover failure to the reconnection or the ID of the LTE cell to which the RRC connection is performed in the VarRLF-Report associated with the NR may be performed when an ID of an LTE cell is not stored in the VarRLF-Report associated with the NR.

The terminal may be a terminal that supports an inter-RAT RLF report.

The method of the terminal may further include an operation of establishing an RRC connection with the NR base station after updating the VarRLF-Report associated with the NR in relation to the selected LTE cell, an operation of receiving a terminal information request message from the NR base station, and an operation of transmitting, to the NR base station, a terminal information response message including the VarRLF-Report associated with the NR.

A terminal in a wireless communication system according to another embodiment of the disclosure may include a transceiver and a controller, and the controller may be configured to receive, from an NR base station, a handover-from-NR command message including information in which a target radio access technology (RAT) is configured to LTE, to select a suitable LTE cell when an available suitable LTE cell exists and select an acceptable LTE cell when an available suitable LTE cell does not exist in the case in which a failure of a handover from NR is detected, to enter an RRC idle mode, to perform an RRC connection establishment procedure with respect to the selected LTE cell, to store a time value from the handover failure to reconnection and an ID of the LTE cell to which the RRC connection is performed in VarRLF-Report associated with the NR when the LTE cell to which the RRC connection is performed is a suitable LTE cell, and to store a time value from the handover failure to reconnection in the VarRLF-Report associated with the NR when the LTE cell to which the RRC connection is performed is an acceptable LTE cell.

### [Advantageous Effects]

According to various embodiments of the disclosure, in relation to a voice fallback, a terminal includes the ID of a cell to which the terminal reconnects and information associated with a time that elapsed from an RLF when making an RLF report, so that an operator that manages base stations may effectively operate a network based on the information.

### [Description of Drawings]

FIG. 1 illustrates a structure of an LTE system according to an embodiment of the disclosure.
FIG. 2 illustrates a radio protocol structure of an LTE system according to an embodiment of the disclosure.
FIG. 3 illustrates a structure of a next-generation mobile communication system according to an embodiment of the disclosure.
FIG. 4 illustrates a radio protocol structure of a next-generation mobile communication system according to an embodiment of the disclosure.
FIG. 5 is a flowchart of a process of updating radio link failure or handover failure information in an RRC connection establishment procedure, after an RRC connection re-establishment procedure performed by a terminal fails in a next generation mobile communication system according to an embodiment of the disclosure;
FIG. 6 is a flowchart of a process of updating radio link failure or handover failure information in an RRC connection establishment procedure, after an RRC connection re-establishment procedure performed by a terminal fails in a next generation mobile communication system according to an embodiment of the disclosure;
FIG. 7 is a flowchart of a process of updating radio link failure or handover failure information in an RRC connection establishment procedure, after an RRC connection re-establishment procedure performed by a terminal fails in a next generation mobile communication system according to an embodiment of the disclosure;
FIG. 8 is a flowchart of a process of updating radio link failure or handover failure information in an RRC connection establishment procedure, after an RRC connection re-establishment procedure performed by a terminal fails in a next generation mobile communication system according to an embodiment of the disclosure;
FIG. 9 is a flowchart of a process in which a terminal transfers radio link failure information or handover failure information to a base station in a next generation mobile communication system according to an embodiment of the disclosure;
FIG. 10 is a flowchart of a process in which a terminal transfers radio link failure information or handover failure information to a base station in a next generation mobile communication system according to an embodiment of the disclosure;
FIG. 11 is a flowchart of a process of updating radio link failure or handover failure information in an RRC connection establishment procedure, after an RRC connection re-establishment procedure performed by a terminal fails in a next generation mobile communication system according to an embodiment of the disclosure;
FIG. 12 is a flowchart of a process of updating radio link failure or handover failure information in an RRC connection establishment procedure, after an RRC connection re-establishment procedure performed by a terminal fails in a next generation mobile communication system according to an embodiment of the disclosure;
FIG. 13 is a block diagram of the internal structure of a terminal according to an embodiment of the disclosure; and
FIG. 14 is a block diagram illustrating the configuration of an NR base station according to an embodiment of the disclosure.

### [Mode for Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

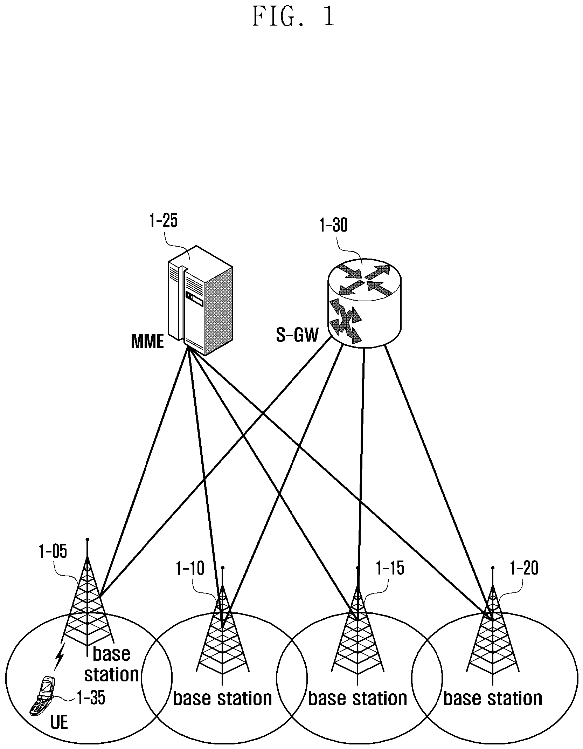

FIG. 1 illustrates a structure of an LTE system according to an embodiment of the disclosure.

Referring to FIG. 1, as illustrated therein, a radio access network of an LTE system includes next-generation base stations (evolved node Bs, hereinafter ENBs, node Bs, or base stations) 1-05, 1-10, 1-15, and 1-20, a mobility management entity (MME) 1-25, and a serving gateway (S-GW) 1-30. A user equipment (hereinafter UE or terminal) 1-35 accesses an external network through the ENBs 1-05 to 1-20 and the S-GW 1-30.

In FIG. 1, the ENBs 1-05 to 1-20 each correspond to a conventional node B in a UMTS system. The ENBs are connected to the UE 1-35 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 1-05 to 1-20 serve as the device. In general, one ENB controls multiple cells. For example, in order to implement a transfer rate of 100 Mbps, the LTE system uses orthogonal frequency division multiplexing (hereinafter referred to as OFDM) as a radio access technology in a bandwidth of, for example, 20 MHz. Furthermore, the next-generation mobile communication system employs an adaptive modulation & coding (hereinafter referred to as AMC) scheme for determining a modulation scheme and a channel coding rate according to a channel state of a UE. The S-GW 1-30 is a device that provides a data bearer, and generates or removes a data bearer under the control of the MME 1-25. The MME is a device responsible for various control functions as well as a mobility management function for a UE, and is connected to multiple base stations.

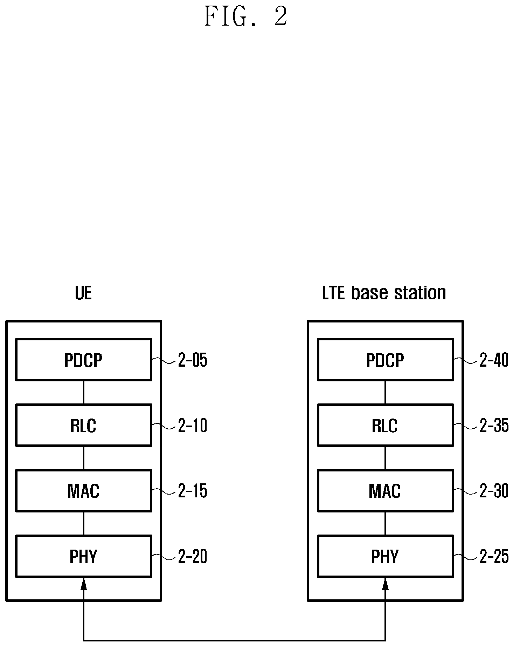

FIG. 2 illustrates a radio protocol structure of an LTE system according to an embodiment of the disclosure.

Referring to FIG. 2, a radio protocol of an LTE system includes a packet data convergence protocol (PDCP) 2-05 or 2-40, a radio link control (RLC) 2-10 or 2-35, and a medium access control (MAC) 2-15 or 2-30 on each of UE and ENB sides. The packet data convergence protocol (PDCP) 2-05 or 2-40 is responsible for operations such as IP header compression/reconstruction. The main functions of the PDCP are summarized as follows.

### Header compression and decompression: ROHC only

### Transfer of user data

In-sequence delivery of upper layer PDUs at PDCP re-establishment procedure for RLC AM

For split bearers in DC (only support for RLC AM): PDCP PDU routing for transmission and PDCP PDU reordering for reception

Duplicate detection of lower layer SDUs at PDCP re-establishment procedure for RLC AM

Retransmission of PDCP SDUs at handover and, for split bearers in DC, of PDCP PDUs at PDCP data-recovery procedure, for RLC AM

### Ciphering and deciphering

### Timer-based SDU discard in uplink

The radio link control (hereinafter referred to as RLC) 2-10 or 2-35 reconfigures a PDCP protocol data unit (PDU) into an appropriate size to perform an ARQ operation. etc. The main functions of the RLC are summarized as follows.
Transfer of upper layer PDUs
Error Correction through ARQ (only for AM data transfer)
Concatenation, segmentation and reassembly of RLC SDUs (only for UM and AM data transfer)
Re-segmentation of RLC data PDUs (only for AM data transfer)
Reordering of RLC data PDUs (only for UM and AM data transfer)
Duplicate detection (only for UM and AM data transfer)
Protocol error detection (only for AM data transfer)
RLC SDU discard (only for UM and AM data transfer)
RLC re-establishment

The MAC 2-15 or 2-30 is connected to several RLC layer devices configured in a single terminal, and multiplexes RLC PDUs into a MAC PDU and demultiplexes a MAC PDU into RLC PDUs. The main functions of the MAC are summarized as follows.
Mapping between logical channels and transport channels
Multiplexing/demultiplexing of MAC SDUs belonging to one or different logical channels into/from transport blocks (TB) delivered to/from the physical layer on transport channels
Scheduling information reporting
Error correction through HARQ
Priority handling between logical channels of one UE
Priority handling between UEs by means of dynamic scheduling
MBMS service identification
Transport format selection
Padding

A physical layer 2-20 or 2-25 performs operations of channel-coding and modulating upper layer data, thereby obtaining OFDM symbols, and delivering the same through a radio channel, or demodulating OFDM symbols received through the radio channel, channel-decoding the same, and delivering the same to the upper layer.

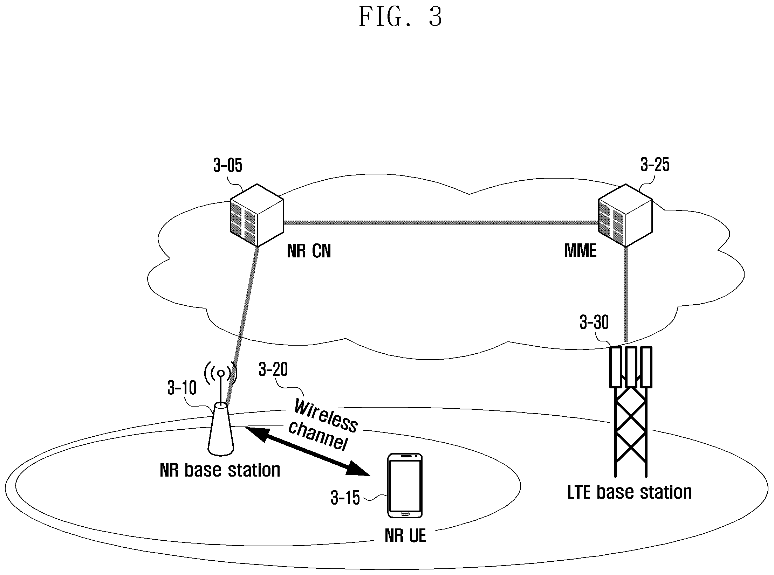

FIG. 3 illustrates a structure of a next-generation mobile communication system according to an embodiment of the disclosure.

Referring to FIG. 3, as illustrated therein, a radio access network of a next-generation mobile communication system (hereinafter NR or 5G) includes a next-generation base station (new radio node B, hereinafter NR gNB or NR base station) 3-10, and a new radio core network (NR CN) 3-05. A user terminal (new radio user equipment, hereinafter NR UE or NR terminal) 3-15 accesses an external network via the NR gNB 3-10 and the NR CN 3-05.

The NR gNB 3-10 may be connected to the NR UE 3-15 through a radio channel and provide outstanding services as compared to a conventional node B. In the next-generation mobile communication system, since all user traffic is serviced through a shared channel, a device that collects state information, such as buffer statuses, available transmit power states, and channel states of UEs, and performs scheduling accordingly is required, and the NR gNB 3-10 serves as the device. In general, one NR gNB controls multiple cells. In order to implement ultrahigh-speed data transfer beyond the current LTE, the next-generation mobile communication system may have a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE. The NR CN 3-05 performs functions such as mobility support, bearer configuration, and QoS configuration. The NR CN 3-05 is a device responsible for various control functions as well as a mobility management function for a UE, and may be connected to multiple base stations. In addition, the next-generation mobile communication system may interwork with the existing LTE system, and the NR CN is connected to an MME 3-25 via a network interface. The MME is connected to an eNB 3-30 that is an existing base station.

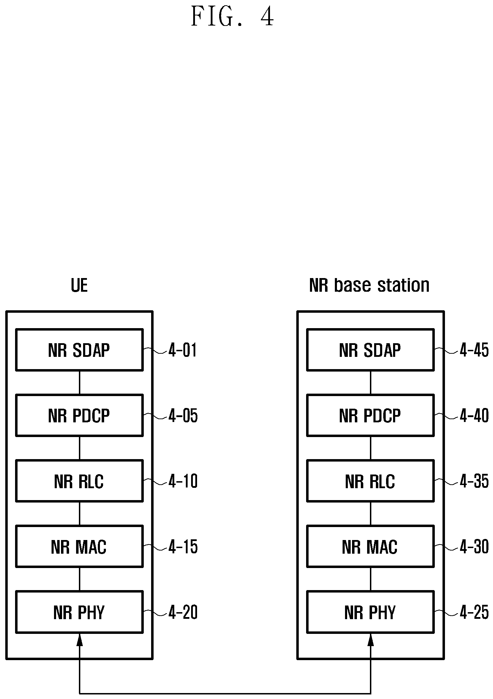

FIG. 4 illustrates a radio protocol structure of a next-generation mobile communication system according to an embodiment of the disclosure.

FIG. 4 illustrates a radio protocol structure of a next-generation mobile communication system to which the disclosure is applicable.

Referring to FIG. 4, a radio protocol of a next-generation mobile communication system includes an NR SDAP 4-01 or 4-45, an NR PDCP 4-05 or 4-40, an NR RLC 4-10 or 4-35, and an NR MAC 4-15 or 4-30 on each of UE and NR base station sides.

The main functions of the NR SDAP 4-01 or 4-45 may include some of functions below.
Transfer of user plane data
Mapping between a QoS flow and a DRB for both DL and UL
Marking QoS flow ID in both DL and UL packets
Reflective QoS flow to DRB mapping for UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 4-05 or 4-40 may include some of functions below.
Header compression and decompression: ROHC only
Transfer of user data
In-sequence delivery of upper layer PDUs
Out-of-sequence delivery of upper layer PDUs
PDCP PDU reordering for reception
Duplicate detection of lower layer SDUs
Retransmission of PDCP SDUs
Ciphering and deciphering
Timer-based SDU discard in uplink

The reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 4-10 or 4-35 may include some of functions below.
Transfer of upper layer PDUs
In-sequence delivery of upper layer PDUs
Out-of-sequence delivery of upper layer PDUs
Error Correction through ARQ
Concatenation, segmentation and reassembly of RLC SDUs
Re-segmentation of RLC data PDUs
Reordering of RLC data PDUs
Duplicate detection
Protocol error detection
RLC SDU discard
RLC re-establishment

The in-sequence delivery of the NR RLC device refers to a function of successively delivering RLC SDUs received from the lower layer to the upper layer, may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs, may include a function of, if there is a lost RLC SDU, successively delivering only RLC SDUs before the lost RLC SDU to the upper layer, may include a function of, if a predetermined timer has expired although there is a lost RLC SDU, successively delivering all RLC SDUs received before the timer was started to the upper layer, may include a function of, if a predetermined timer has expired although there is a lost RLC SDU, successively delivering all RLC SDUs received up to present to the upper layer. In addition, the NR RLC device may process RLC PDUs in the received order (regardless of the sequence number order, in the order of arrival) and deliver same to the PDCP device regardless of the order (out-of-sequence delivery), and may, in the case of segments, receiving segments which are stored in a buffer or which are to be received later, reconfigure same into one complete RLC PDU, process, and deliver same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 14-15 or 4-30 may be connected to multiple NR RLC layer devices configured in one UE, and the main functions of the NR MAC may include some of functions below.
Mapping between logical channels and transport channels
Multiplexing/demultiplexing of MAC SDUs
Scheduling information reporting
Error correction through HARQ
Priority handling between logical channels of one UE
Priority handling between UEs by means of dynamic scheduling
MBMS service identification
Transport format selection
Padding

An NR PHY layer 4-20 or 4-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

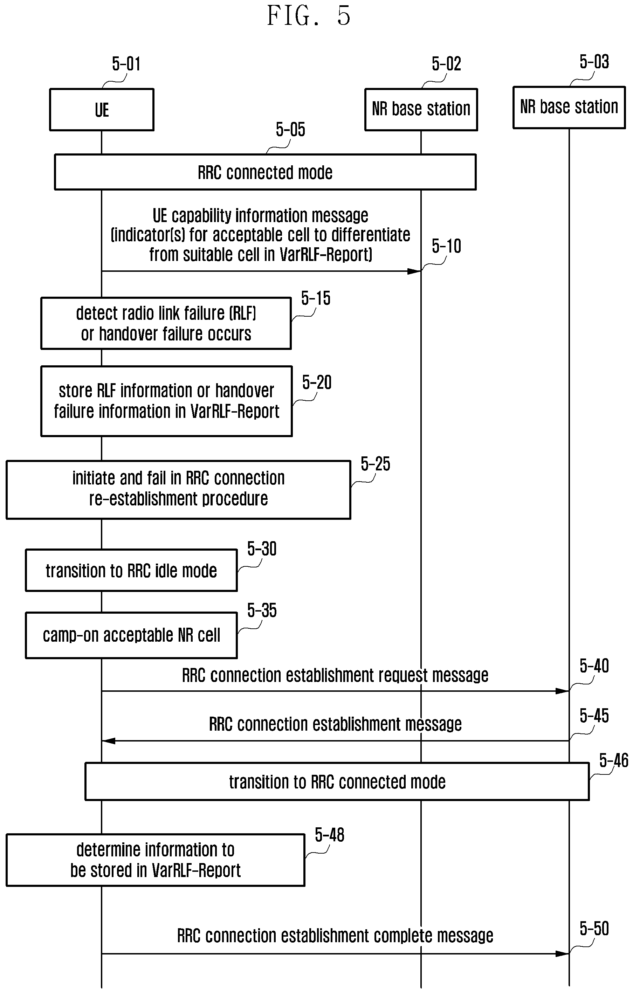

FIG. 5 is a flowchart of a process of updating radio link failure information or handover failure information in an RRC connection establishment procedure, after an RRC connection re-establishment procedure performed by a UE fails in a next generation mobile communication system according to an embodiment of the disclosure.

Referring to FIG. 5, a UE 5-01 may be in an RRC connected mode (RRC_CONNECTED) by configuring an RRC connection with an NR base station 5-02 in operation 5-05.

In operation 5-10, the UE 5-01 may transmit a UE capability information message (UECapabilityInformation) to the base station 5-02. An indicator associated with an acceptable cell may be included in the message, and this may be an indicator associated with cells different from a suitable cell of VarRLF-Report. In addition, the message may include UE capability information associated with capability of storing information different from a suitable cell of VarRLF-Report.

In operation 5-15, the UE 5-01 may detect a radio link failure (RLF) or a handover failure may occur (handover failure or reconfiguration with sync failure) due to a predetermined reason. For example, the UE may detect an RLF when a timer T310 expires for a currently connected primary cell (PCell) 5-02 or a handover failure may occur when a timer T304 expires although the UE receives an RRC message (e.g., RRCReconfiguration or MobilityFromNRCommand) indicating handover is required from the currently connected primary cell.

In operation 5-20, the UE 5-01 may store radio link failure information (when detecting an RLF) or handover failure information (when a handover failure occurs) in VarRLF-Report. Specifically, the UE may store the radio link failure information or the handover failure information in the VarRLF-Report according to the following procedure.

The UE shall determine the content in the *VarRLF-Report* as follows:
1> clear the information included in *VarRLF-Report,* if any;
1> set the *plmn-IdentityList* to include the list of EPLMNs stored by the UE (i.e. includes the RPLMN);
1> set the *measResultLastServCell* to include the cell level RSRP, RSRQ and the available SINR, of the source PCell (in case HO failure) or PCell (in case RLF) based on the available SSB and CSI-RS measurements collected up to the moment the UE detected failure;
1> if the SS/PBCH block-based measurement quantities are available:
   2> set the *rsIndexResults* in *measResultLastServCell* to include all the available measurement quantities of the source PCell (in case HO failure) or PCell (in case RLF), ordered such that the highest SS/PBCH block RSRP is listed first if SS/PBCH block RSRP measurement results are available, otherwise the highest SS/PBCH block RSRQ is listed first if SS/PBCH block RSRQ measurement results are available, otherwise the highest SS/PBCH block SINR is listed first, based on the available SS/PBCH block based measurements collected up to the moment the UE detected failure;
1> if the CSI-RS based measurement quantities are available:
   2> set the *rsIndexResults* in *measResultLastServCell* to include all the available measurement quantities of the source PCell (in case HO failure) or PCell (in case RLF), ordered such that the highest CSI-RS RSRP is listed first if CSI-RS RSRP measurement results are available, otherwise the highest CSI-RS RSRQ is listed first if CSI-RS RSRQ measurement results are available, otherwise the highest CSI-RS SINR is listed first, based on the available CSI-RS based measurements collected up to the moment the UE detected failure;
1> set the *ssbRLMConfigBitmap* and/or *csi-rsRLMConfigBitmap* in *measResultLastServCell* to include the radio link monitoring configuration of the source PCell (in case HO failure) or PCell (in case RLF), if available;
1> for each of the configured *measObjectNR* in which measurements are available:
   2> if the SS/PBCH block-based measurement quantities are available:
      3> set the *measResultListNR* in *measResultNeighCells* to include all the available measurement quantities of the best measured cells, other than the source PCell (in case HO failure) or PCell (in case RLF), ordered such that the cell with highest SS/PBCH block RSRP is listed first if SS/PBCH block RSRP measurement results are available, otherwise the cell with highest SS/PBCH block RSRQ is listed first if SS/PBCH block RSRQ measurement results are available, otherwise the cell with highest SS/PBCH block SINR is listed first, based on the available SS/PBCH block based measurements collected up to the moment the UE detected failure;
         4> for each neighbour cell included, include the optional fields that are available;
      NOTE 0a: For the neighboring cells included in *measResultListNR* in *measResultNeighCells* ordered based on the SS/PBCH block measurement quantities, UE also includes the CSI-RS based measurement quantities, if available.
   2> if the CSI-RS based measurement quantities are available:
      3> set the *measResultListNR* in *measResultNeighCells* to include all the available measurement quantities of the best measured cells, other than the source PCell (in case HO failure) or PCell (in case RLF), ordered such that the cell with highest CSI-RS RSRP is listed first if CSI-RS RSRP measurement results are available, otherwise the cell with highest CSI-RS RSRQ is listed first if CSI-RS RSRQ measurement results are available, otherwise the cell with highest CSI-RS SINR is listed first, based on the available CSI-RS based measurements collected up to the moment the UE detected radio link failure;
         4> for each neighbour cell included, include the optional fields that are available;
         NOTE 0b:For ordering the neighboring cells based on the CSI-RS measurement quantities, UE includes measurements only for the cells not yet included in *measResultListNR* in *measResultNeighCells* to avoid overriding SS/PBCH block-based ordered measurements.
   2> for each neighbour cell, if any, included in *measResultListNR* in *measResultNeighCells:*
      3> if the UE supports RLF-Report for conditional handover and if the neighbour cell is one of the candidate cells for which the *reconfigurationWithSync* is included in the *masterCellGroup* in the MCG *VarConditionalReconfig* at the moment of the detected failure:
         4> set *choConfig* in *MeasResult2NR* to the execution condition for each *measId* within *condTriggerConfig* associated to the neighbour cell within the MCG *VarConditionalReconfig;*
         4> if the first entry of *choConfig* corresponds to a fulfilled execution condition at the moment of handover failure, or radio link failure; or
         4> if the second entry of *choConfig,* if available, corresponds to a fulfilled execution condition at the moment of handover failure, or radio link failure:
            *5> set firstTriggeredEvent* to the execution condition *condFirstEvent* corresponding to the first entry of *choConfig* or to the execution condition *condSecondEvent* corresponding to the second entry of *choConfig,* whichever execution condition was fulfilled first in time;
            5> set *timeBetweenEvents* to the elapsed time between the point in time of fullfilling the condition in *choConfig* that was fulfilled first in time, and the point in time of fullfilling the condition in *choConfig* that was fulfilled second in time, if both the first execution condition corresponding to the first entry and the second execution condition corresponding to the second entry in the *choConfig* were fullfilled;
1> for each of the configured EUTRA frequencies in which measurements are available;
   2> set the *measResultListEUTRA* in *measResultNeighCells* to include the best measured cells ordered such that the cell with highest RSRP is listed first if RSRP measurement results are available, otherwise the cell with highest RSRQ is listed first, and based on measurements collected up to the moment the UE detected failure;
      3> for each neighbour cell included, include the optional fields that are available;
   NOTE 1: The measured quantities are filtered by the L3 filter as configured in the mobility measurement configuration. The measurements are based on the time domain measurement resource restriction, if configured. Exclude-listed cells are not required to be reported.
1> set the *c-RNTI* to the C-RNTI used in the source PCell (in case HO failure) or PCell (in case RLF);
1> if the failure is detected due to reconfiguration with sync failure as described in 5.3.5.8.3, set the fields in *VarRLF-report* as follows:
   2> set the *connectionFailureType* to *hof*;
   2> if the UE supports RLF-Report for DAPS handover and if any DAPS bearer was configured while T304 was running:
      3> set *lastHO-Type* to *dops*;
      3> if radio link failure was detected in the source PCell, according to clause 5.3.10.3:
      4> set *timeConnSourceDAPS-Failure* to the time between the initiation of the DAPS handover execution and the radio link failure detected in the source PCell while T304 was running;
      4> set the *rlf-Cause* to the trigger for detecting the source radio link failure in accordance with clause 5.3.10.4;
   2> if the UE supports RLF-Report for conditional handover and if configuration of the conditional handover is available in the MCG *VarConditionalReconfig* at the moment of the handover failure:
      3> if the UE executed a conditional handover toward target PCell according to the *condRRCReconfig* of the target PCell:
         4> set *timeSinceCHO-Reconfig* to the time elapsed between the execution of the last *RRCReconfiguration* message including *reconfigurationWithSync* for the target PCell of the failed conditional handover, and the reception in the source PCell of the last *conditionalReconfiguration* including the *condRRCReconfig* of the target PCell of the failed conditional handover;
      3> else:
         4> set *timeSinceCHO-Reconfig* to the time elapsed between the execution of the last *RRCReconfiguration* message including *reconfigurationWithSync* for the target PCell of the failed handover, and the reception in the source PCell of the last *conditionalReconfiguration* including the *condRRCReconfig;*
      3> set *choCandidateCellList* to include the global cell identity, if available, and otherwise to the physical cell identity and carrier frequency of each of the candidate target cells for conditional handover included in *condRRCReconfig* within the MCG *VarConditionalReconfig* at the time of the failed handover, excluding the candidate target cells included in *measResulNeighCells;*
   2> if the UE supports RLF-Report for conditional handover and if the last executed *RRCReconfiguration* message including *reconfigurationWithSync* was concerning a conditional handover:
      3> set *lastHO-Type* to *cho;*
   2> set the *nrFailedPCellId* in *failedPCellId* to the global cell identity and tracking area code, if available, and otherwise to the physical cell identity and carrier frequency of the target PCell of the failed handover;
   2> include *nrPreviousCell* in *previousPCellId* and set it to the global cell identity and tracking area code of the PCell where the last *RRCReconfiguration* message including *reconfigurationWithSync* was received;
   2> set the *timeConnFailure* to the elapsed time since the execution of the last *RRCReconfiguration* message including the *reconfigurationWithSync;*
1> else if the failure is detected due to Mobility from NR failure as described in 5.43.5, set the fields in *VarRLF-report* as follows:
   2> set the *connectionFailureType* to *hof,*
   2> if last *MobilityFromNRCommand* concerned a failed inter-RAT handover from NR to E-UTRA and if the UE supports Radio Link Failure Report for Inter-RAT MRO EUTRA (NR to EUTRA):
      3> set the *eutraFailedPCellId* in *failedPCellId* to the global cell identity and tracking area code, if available, and otherwise to the physical cell identity and carrier frequency of the target PCell of the failed handover;
   2> include *nrPreviousCell* in *previousPCellld* and set it to the global cell identity and tracking area code of the PCell where the last *MobilityFromNRCommand* message was received;
   2> set the *timeConnFailure* to the elapsed time since the initialization of the handover associated to the last *MobilityFromNRCommand* message;
1> else if the failure is detected due to radio link failure as described in 5.3.10.3, set the fields in *VarRLF-report* as follows:
   2> set the *connectionFailureType* to *rlf;*
   2> set the *rlf-Cause* to the trigger for detecting radio link failure in accordance with clause 5.3.10.4;
   2> set the *nrFailedPCellId* in *failedPCellId* to the global cell identity and the tracking area code, if available, and otherwise to the physical cell identity and carrier frequency of the PCell where radio link failure is detected;
   2> if an *RRCReconfiguration* message including the *reconfigurationWithSync* was received before the connection failure:
      3> if the last executed *RRCReconfiguration* message including the *reconfigurationWithSync* concerned an intra NR handover and it was received while connected to the previous PCell to which the UE was connected before connecting to the PCell where radio link failure is detected; and
      3> if the PCell in which the radio link failure was detected was a result of cell selection and the T311 was not running at the time of PCell selection:
         4> include the *nrPreviousCell* in *previousPCellId* and set it to the global cell identity and the tracking area code of the PCell where the last executed *RRCReconfiguration* message including *reconfigurationWithSync* was received;
         4> if the last executed *RRCReconfiguration* message including *reconfigurationWithSync* was concerning a DAPS handover:
            5> set *lastHO-Type* to *daps;*
         4> else if the last executed *RRCReconfiguration* message including *reconfigurationWithSync* was concerning a conditional handover:
            5> set *lastHO-Type* to *cho;*
         4> set the *timeConnFailure* to the elapsed time since the execution of the last *RRCReconfiguration* message including the *reconfigurationWithSync;*
      3> else if the last *RRCReconfiguration* message including the *reconfigurationWithSync* concerned a handover to NR from E-UTRA and if the UE supports Radio Link Failure Report for Inter-RAT MRO EUTRA:
         4> include the *eutraPreviousCell* in *previousPCellId* and set it to the global cell identity and the tracking area code of the E-UTRA PCell where the last *RRCReconfiguration* message including *reconfigurationWithSync* was received embedded in E-UTRA RRC message *MobilityFromEUTRACommand* message as specified in TS 36.331 [10] clause 5.4.3.3;
         4> set the *timeConnFailure* to the clapsed time since reception of the last *RRCReconfiguration* message including the *reconfigurationWithSync* embedded in E-UTRA RRC message *MobilityFromEUTRACommand* message as specified in TS 36.331 [10] clause 5.4.3.3;
   2> if configuration of the conditional handover is available in the MCG *VarConditionalReconfig* at the moment of declaring the radio link failure:
      3> set *timeSinceCHO-Reconfig* to the time elapsed between the detection of the radio link failure, and the reception, in the source PCell, of the last *conditionalReconfiguration* including the *condRRCReconfig* message;
      3> set *choCandidateCellList* to include the global cell identity if available, and otherwise to the physical cell identity and carrier frequency of each of all the candidate target cells for conditional handover included in *condRRCReconfig* within the MCG *VarConditionalReconfig* at the time of radio link failure, excluding the candidate target cells included in *measResulNeighCells*;
1> if *connectionFailureType* is *rlf* and the *rlf-Cause* is set to *randomAccessProblem* or *beamFailureRecoveryFailure;* or
1> if *connectionFailureType* is *hof* and if the failed handover is an intra-RAT handover:
   2> set the *ra-InformationCommon* to include the random-access related information as described in clause 5.7.10.5;
1> if available, set the *locationInfo* as in 5.3.3.7.

For reference, the UE may determine rlf-Cause according to the following procedure.

The UE shall set the *rlf-Cause* in the *VarRLF-Report* as follows:
1> if the UE declares radio link failure due to T310 expiry:
   2> set the *rif-Cause* as *t310-Expiry*;
1> else if the UE declares radio link failure due to the random access problem indication from MCG MAC:
   2> if the random access procedure was initiated for beam failure recovery:
      3> set the *rlf-Cause* as *beamFailureRecoveryFailure*;
   2> else:
      3> set the *rlf-Cause* as *randomAccessProblem*;
1> else if the UE declares radio link failure due to the reaching of maximum number of retransmissions from the MCG RLC:
   2> set the *rlf-Cause* as *rlc-MaxNumRetx*;
1> else if the UE declares radio link failure due to consistent uplink LBT failures:
   2> set the *rlf-Cause* as *lbtFailure;*
1> else if the IAB-MT declares radio link failure due to the reception of a BH RLF indication on BAP entity:
   2> set the *rif-Cause* as *bh-rlfRecoveryFailure.*
1> else if the UE declares radio link failure due to T312 expiry:
   2> set the *rlf-Cause* as *t312-Expiry;*

In operation 5-25, the UE 5-01 may initiate an RRC connection re-establishment procedure. However, the UE 5-01 may not successfully perform the procedure but fails due to a predetermined reason. For example, the UE may operate a timer T311 when the RRC connection re-establishment procedure is initiated, but when the UE fails to select a suitable NR cell before the timer T311 expires, the procedure may fail.

In operation 5-30, the UE 5-01 may transition to an RRC idle (RRC_IDLE) mode.

In operation 5-35, the UE 5-01 may camp on an acceptable NR cell 5-03.

In operation 5-40, the UE 5-01 may perform an RRC connection establishment procedure in order to establish an RRC connection with the acceptable NR cell 5-03. That is, the UE 5-01 may transmit an RRC connection establishment request message (RRCSetupRequest) to the cell 5-03. In response thereto, the cell may transmit an RRC connection establishment message (RRCSetup) to the UE in operation 5-45. In operation 5-46, the UE may transition to an RRC connected mode (RRC_CONNECTED) by applying RRCSetup. The UE may consider or determine the cell as a current PCell. In operation 5-48, the UE according to the disclosure may propose performing at least one of the proposed methods (i.e., one of the following methods or a combination of some or all of the methods) according to the following conditions.
- If radio link failure information or handover failure information is included in VarRLF-Report and a public land mobile network (registered PLMN) which the UE registers in is included in a plmn-IdentityList stored in VarRLF-Report (if the UE has radio link failure or handover failure information available in VarRLF-Report and if the RPLMN is included in plmn-IdentityList stored in VarRLF-Report), or if the UE has radio link failure information or handover failure information included in VarRLF-Report and an acceptable cell is a current PCell.
   ■ If reconnectCellId is not set in VarRLF-Report after an RRC connection re-establishment procedure fails (if reconnectCellId in VarRLF-Report is not set after failing to perform reestablishment).
      ◆If the UE supports RLF-Report for a conditional handover and choCellId is set in VarRLF-Report (if the UE supports RLF-Report for conditional handover and if chocellId in VarRLF-Report is set).
         - Method 1: Information associated with a time that elapsed from a radio link failure or a handover failure in failedPCellId stored in VarRLF-Report may be set in timeUntilReconnection in VarRLF-Report (set timeUntilReconnection in VarRLF-Report to the time that elapsed since the radio link failure or handover failure experienced in the failedPCellId stored in VarRLF-Report).
         - Method 2: Setting in timeUntilReconnection in VarRLF-Report may not be performed. Since the value is not set, network optimization may be performed by identifying that the UE has established an RRC connection with an acceptable cell when a suitable cell retrieves the VarRLF-Report from the UE in the future.
         - Method 3: Information associated with a time that elapsed from a radio link failure or a handover failure in a failedPCellId stored in VarRLF-Report may be set in new timeUntilReconnection for an acceptable cell in the VarRLF-Report. Through the above, network optimization may be performed by identifying that the UE has established an RRC connection with an acceptable cell when a suitable cell retrieves the VarRLF-Report from the UE in the future.
      ◆Otherwise (else),
         - Method 5: The UE may set a time that elapsed from the last radio link failure or handover failure in timeUntilReconnection in VarRLF-Report (set timeUntilReconnection in VarRLF-Report to the time that elapsed since the last radio link failure or handover failure).
         - Method 6: Setting in timeUntilReconnection in VarRLF-Report may not be performed. In the case in which the value is not set, network optimization may be performed by identifying that the UE has established an RRC connection with an acceptable cell when a suitable cell retrieves the VarRLF-Report from the UE in the future.
         - Method 7: The UE may set a time that elapsed from the last radio link failure or handover failure in new timeUntilReconnection for an acceptable cell in VarRLF-Report. Through the above, network optimization may be performed by identifying that the UE has established an RRC connection with an acceptable cell when a suitable cell retrieves the VarRLF-Report from the UE in the future.
      ◆The UE may set a global cell identity and a tracking area code of the current PCell as nrReconnectCellId in reconnectCellId of VarRLF-Report (set nrReconnectCellId in reconnectCellId in VarRLF-Report to the global cell identity and the tracking area code of the PCell). The UE may include, in the VarRLF-Report, an indicator indicating that the corresponding cell is an acceptable cell. Alternatively, the UE may not set any information in reconnectCellId of the VarRLF-Report. Through the above, network optimization may be performed by identifying that the UE has established an RRC connection with an acceptable cell when a suitable cell retrieves the VarRLF-Report from the UE in the future.

In relation to the above-proposed contents, a base station may control which method the UE is to apply according to a configuration. The UE may transmit an RRC connection establishment complete (RRCSetupComplete) message to the cell in operation 5-50. The UE may transmit the VarRLF-Report to the suitable cell 5-02 later via a UE information procedure, and an operator that manages a suitable cell may optimize a network based on the corresponding information. For example, based on the timeUntilReconnection information, the operator may identify how much time elapsed from an RRC connection re-establishment failure until the UE having radio link failure information or handover failure information in VarRLF-Report configures an RRC connection again with a predetermined cell. Accordingly, if the corresponding time is too long, the operator may operate a network by additionally providing a new cell or optimizing existing cells. Similarly, based on the reconnectCellId, the operator may identify a cell to which the UE has subsequently connected, and this information may be used for determining whether to additionally provide a cell or to appropriately manage existing cells. In addition, if the reconnectCellId for an acceptable cell is set in VarRLF-Report, the UE may not report the corresponding information to a suitable cell. An acceptable cell does not belong to an operator which the UE subscribes to, and thus, if the UE sends reconnectCellId to a subscribed operator, it is provision of network operation information of another operator.

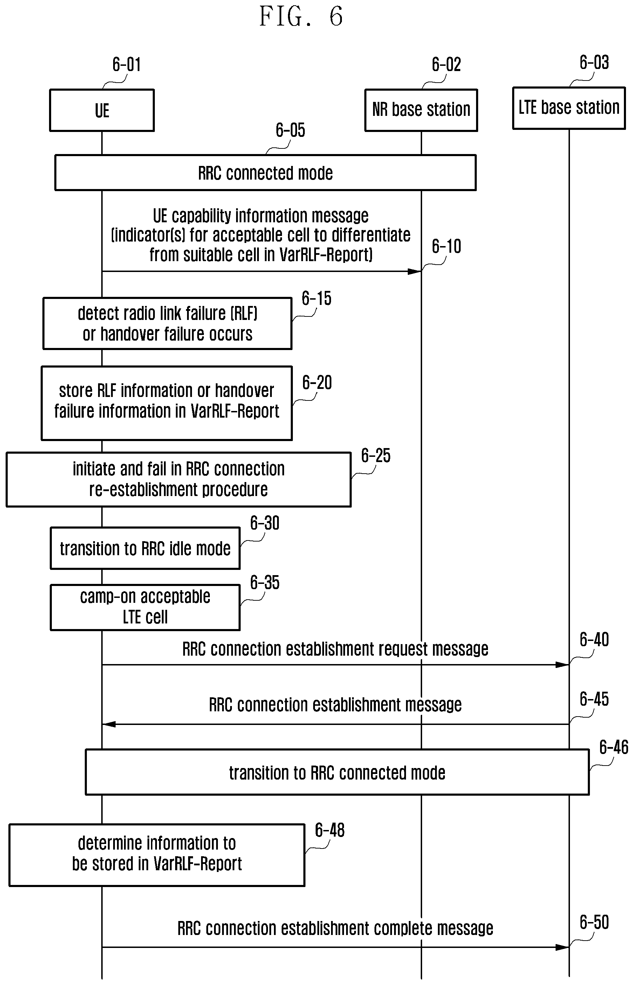

FIG. 6 is a flowchart of a process of updating radio link failure information or handover failure information in an RRC connection establishment procedure, after an RRC connection re-establishment procedure performed by a UE fails in a next generation mobile communication system according to an embodiment of the disclosure.

Referring to FIG. 6, a UE 6-01 may be in an RRC connected mode (RRC_CONNECTED) by configuring an RRC connection with an NR base station 6-02 in operation 6-05.

In operation 6-10, the UE 6-01 may transmit a UE capability information message (UECapabilityInformation) to the base station 6-02. This may be the same as the above-described embodiment.

In operation 6-15, the UE 6-01 may detect a radio link failure (RLF) or a handover failure may occur (handover failure or reconfiguration with sync failure) due to a predetermined reason. For example, the UE may detect an RLF when a timer T310 expires for a currently connected primary cell (PCell) 6-02 or a handover failure may occur when a timer T304 expires although the UE receives an RRC message (e.g., RRCReconfiguration or MobilityFromNRCommand) indicating handover is required from the currently connected primary cell.

In operation 6-20, the UE 6-01 may store radio link failure information (when detecting an RLF) or handover failure information (when a handover failure occurs) in VarRLF-Report. This may be the same as the above-described embodiment.

In operation 6-25, the UE 6-01 may initiate an RRC connection re-establishment procedure. However, the UE 6-01 may not successfully perform the procedure but fails due to a predetermined reason. For example, the UE may operate a timer T311 when the RRC connection re-establishment procedure is initiated, but when the UE fails to select a suitable NR cell before the timer T311 expires, the procedure may fail.

In operation 6-30, the UE 6-01 may transition to an RRC idle mode (RRC_IDLE).

In operation 6-35, the UE 6-01 may camp on an acceptable LTE cell 6-03.

In operation 6-40, the UE 6-01 may perform an RRC connection establishment procedure in order to establish an RRC connection with the acceptable cell 6-03. That is, the UE 6-01 may transmit an RRC connection establishment request message (RRCSetupRequest) to the cell 6-03. In response thereto, the cell may transmit an RRC connection establishment message (RRCSetup) to the UE in operation 6-45. In operation 6-46, the UE may transition to an RRC connected mode (RRC_CONNECTED) by applying RRCSetup. The UE may consider or determine the cell as a current PCell. In operation 6-48, the UE according to the disclosure may propose performing at least one of the proposed methods (i.e., one of the following methods or a combination of some or all of the methods) according to the following conditions.
- If the UE supports an RLF report for an inter-RAT MRO EUTRA defined in the TS 38.306 standard, radio link failure information or handover failure information is included in VarRLF-Report of the TS 38.331 standard, and a public land mobile network (registered PLMN) which the UE registers in is included in plmn-IdentityList stored in the VarRLF-Report of the TS 38.331 standard (if the UE supports RLF report for inter-RAT MRO EUTRA as defined in TS 38.306, and if the UE has radio link failure or handover failure information available in VarRLF-Report of TS 38.331 and if the RPLMN is included in plmn-IdentityList stored in VarRLF-Report of TS 38.331), or if handover failure information is included in the VarRLF-Report and an acceptable cell is a current PCell.
   ■ If reconnectCellId is not set in VarRLF-Report of the TS 38.331 standard, after an RRC connection re-establishment procedure fails (if reconnectCellId in VarRLF-Report of TS 38.331 is not set after failing to perform reestablishment).
      ◆Method 1: The UE may set a time that elapsed from the last radio link failure or handover failure in timeUntilReconnection in VarRLF-Report of the TS 38.331 standard (set timeUntilReconnection in VarRLF-Report of TS 38.331 to the time that elapsed since the last radio link failure or handover failure).
      ◆Method 2: Setting in timeUntilReconnection in VarRLF-Report of the TS 38.331 standard may not be performed. Since the value is not set, network optimization may be performed by identifying that the UE has established an RRC connection with an acceptable cell when a suitable cell retrieves the VarRLF-Report from the UE in the future.
      ◆Method 3: The UE may set a time that elapsed from the last radio link failure or handover failure in new timeUntilReconnection for an acceptable cell in VarRLF-Report of the TS 38.331 standard. Through the above, network optimization may be performed by identifying that the UE has established an RRC connection with an acceptable cell when a suitable cell retrieves the VarRLF-Report from the UE in the future.
         ◆The UE may set a global cell identity and a tracking area code of the current PCell as eutraReconnectCellId in reconnectCellId of VarRLF-Report of the TS 38.331 standard (set eutraReconnectCellId in reconnectCellId in VarRLF-Report of TS 38.331 to the global cell identity and the tracking area code of the PCell). The UE may include, in VarRLF-Report, an indicator indicating that the corresponding cell is an acceptable cell. Alternatively, the UE may not set any information in reconnectCellId of the VarRLF-Report. Through the above, network optimization may be performed by identifying that the UE has established an RRC connection with an acceptable cell when a suitable cell retrieves the VarRLF-Report from the UE in the future.

In relation to the above-proposed contents, a base station may control which method the UE is to apply according to a configuration. The UE may transmit an RRC connection establishment complete message (RRCConnectionSetupComplete) to the cell in operation 6-50. The UE may transmit the VarRLF-Report to the suitable cell 6-02 via a UE information procedure, and an operator that manages a suitable cell may optimize a network based on the corresponding information. For example, based on the timeUntilReconnection information, the operator may identify how much time elapsed from an RRC connection re-establishment failure until the UE having radio link failure information or handover failure information in VarRLF-Report configures an RRC connection again with a predetermined cell. Accordingly, if the corresponding time is too long, the operator may operate a network by additionally providing a new cell or optimizing existing cells. Similarly, based on the reconnectCellId, the operator may identify a cell to which the UE has subsequently connected, and this information may be used for determining whether to additionally provide a cell or to appropriately manage existing cells. In addition, if the reconnectCellId for an acceptable cell is set in VarRLF-Report, the UE may not report the corresponding information to a suitable cell. An acceptable cell does not belong to an operator which the UE subscribes to, and thus, if the UE sends reconnectCellId to a subscribed operator, it is provision of network operation information of another operator.

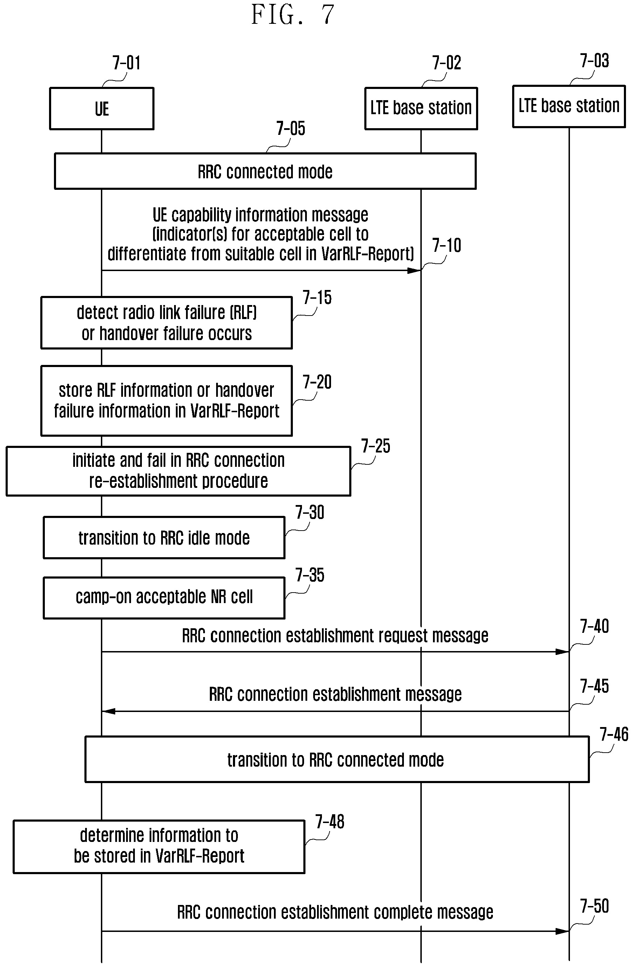

FIG. 7 is a flowchart of a process of updating radio link failure information or handover failure information in an RRC connection establishment procedure, after an RRC connection re-establishment procedure performed by a UE fails in a next generation mobile communication system according to an embodiment of the disclosure.

Referring to FIG. 7, a UE 7-01 may be in an RRC connected mode (RRC_CONNECTED) by configuring an RRC connection with an LTE base station 7-02. The LTE base station may be connected to an EPC or 5GC in operation 7-05.

In operation 7-10, the UE 7-01 may transmit a UE capability information message (UECapabilityInformation) to the base station 7-02. An indicator associated with an acceptable cell may be included in the message, and this may be an indicator associated with cells different from a suitable cell of VarRLF-Report. In addition, the message may include UE capability information associated with capability of storing information different from a suitable cell of VarRLF-Report.

In operation 7-15, the UE 7-01 may detect a radio link failure (RLF) or a handover failure may occur (handover failure) due to a predetermined reason. For example, the UE may detect an RLF when a timer T310 expires for a currently connected primary cell (PCell) 7-02, or a handover failure may occur when a timer T304 expires although the UE receives an RRC message (e.g., RRCConnectionReconfiguration or MobilityFromEUTRACommand such that targetRAT-Type is set to nr) indicating handover is required from the currently connected primary cell.

In operation 7-20, the UE 7-01 may store radio link failure information (when detecting an RLF) or handover failure information (when a handover failure occurs) in the VarRLF-Report. Specifically, the UE may store the radio link failure information in the VarRLF-Report according to the following procedure.
2> store the following radio link failure information in the *VarRLF-Report* (*VarRLF-Report-NB* in NB-IoT) by setting its fields as follows:
   3> clear the information included in *VarRLF-Report* (*VarRLF-Report-NB* in NB-IoT), if any;
   3> set the *plmn-IdentityList* to include the list of EPLMNs stored by the UE (i.e. includes the RPLMN);
   3> set the *measResultLastServCell* to include the RSRP and RSRQ, if available, of the PCell based on measurements collected up to the moment the UE detected radio link failure;
   3> except for NB-IoT, set the *measResultNeighCells* to include the best measured cells, other than the PCell, ordered such that the best cell is listed first, and based on measurements collected up to the moment the UE detected radio link failure, and set its fields as follows;
      4> if the UE was configured to perform measurements for one or more EUTRA frequencies, include the *measResultListEUTRA;*
      4> if the UE was configured to perform measurement reporting for one or more neighbouring UTRA frequencies, include the *measResultListUTRA;*
      4> if the UE was configured to perform measurement reporting for one or more neighbouring GERAN frequencies, include the *measResultListGERAN;*
      4> if the UE was configured to perform measurement reporting for one or more neighbouring CDMA2000 frequencies, include the *measResultsCDMA2000;*
      4> if the UE was configured to perform measurement reporting, not related to NR sidelink communication, for one or more neighbouring NR frequencies, include the *measResultListNR;*
      4> for each neighbour cell included, include the optional fields that are available;
      NOTE 1: The measured quantities are filtered by the L3 filter as configured in the mobility measurement configuration. The measurements are based on the time domain measurement resource restriction, if configured. Exclude-listed cells are not required to be reported.
   3> except for NB-IoT, if available, set the *logMeasResultListWLAN* to include the WLAN measurement results, in order of decreasing RSSI for WLAN APs;
   3> except for NB-IoT, if available, set the *logMeasResultListBT* to include the Bluetooth measurement results, in order of decreasing RSSI for Bluetooth beacons;
   3> if detailed location information is available, set the content of the *locationInfo* as follows:
      4> include the *location Coordinates;*
      4> include the *horizontalVelocity,* if available;
   3> set the *failedPCellId* to the global cell identity, if available, and otherwise , except for NB-IoT, to the physical cell identity and carrier frequency of the PCell where radio link failure is detected;
   3> except for NB-IoT, set the *tac-FailedPCell* to the tracking area code, if available, of the PCell where radio link failure is detected;
   3> except for NB-IoT, if an *RRCConnectionReconfiguration* message including the *mobilityControlInfo* was received before the connection failure:
      4> if the last *RRCConnectionReconfiguration* message including the *mobilityControlInfo* concerned an intra E-UTRA handover:
         5> include the *previousPCellld* and set it to the global cell identity of the PCell where the last RRCConnectionReconfiguration message including *mobilityControlInfo* was received;
         5> set the *timeConnFailure* to the elapsed time since reception of the last *RRCConnectionReconfiguration* message including the *mobilityControlInfo*;
      4> if the last *RRCConnectionReconfiguration* message including the *mobilityControlInfo* concerned a handover to E-UTRA from UTRA and if the UE supports Radio Link Failure Report for Inter-RAT MRO:
         5> include the *previousUTRA-CellId* and set it to the physical cell identity, the carrier frequency and the global cell identity, if available, of the UTRA Cell in which the last *RRCConnectionReconfiguration* message including *mobilityControlInfo* was received;
         5> set the *timeConnFailure* to the elapsed time since reception of the last *RRCConnectionReconfiguration* message including the *mobilityControlInfo;*
      4> if the last *RRCConnectionReconfiguration* message including the *mobilityControlInfo* concerned a handover to E-UTRA from NR and if the UE supports Radio Link Failure Report for Inter-RAT MRO NR:
         5> include the *previousNR-PCellId* and set it to the global cell identity of the PCell where the last RRCConnectionReconfiguration message including *mobilityControlInfo* was received embedded in NR RRC message *MobilityFromNRCommand* message as specified in TS 38.331 [82] clause 5.4.3.3;
         5> set the *timeConnFailure* to the elapsed time since reception of the last *RRCConnectionReconfiguration* message including the *mobilityControlInfo* embedded in NR RRC message *MobilityFromNRCommand* message as specified in TS 38.331 [82] clause 5.4.3.3.
   3> except for NB-IoT, if the UE supports QCI1 indication in Radio Link Failure Report and has a DRB for which QCI is 1:
      4> include the *drb-EstablishedWithQCI-1*;
   3> except for NB-IoT, set the *connectionFailureType* to *rlf*;
   3> except for NB-IoT, set the *c-RNTI* to the C-RNTI used in the PCell;
   3> except for NB-IoT, set the *rlf-Cause* to the trigger for detecting radio link failure;

The UE may store the handover failure information in the VarRLF-Report according to the following procedure.
3> clear the information included in *VarRLF-Report,* if any;
3> set the *plmn-IdentityList* to include the list of EPLMNs stored by the UE (i.e. includes the RPLMN);
3> set the *measResultLastServCell* to include the RSRP and RSRQ, if available, of the source PCell based on measurements collected up to the moment the UE detected handover failure and in accordance with the following;
   4> if the UE includes *rsrqResult,* include the *lastServCellRSRQ-Type;*
3> set the *measResultNeighCells* to include the best measured cells, other than the source PCell, ordered such that the best cell is listed first, and based on measurements collected up to the moment the UE detected handover failure, and set its fields as follows;
   4> if the UE was configured to perform measurements for one or more EUTRA frequencies, include the *measResultListEUTRA;*
   4> if the UE includes *rsrqResult,* include the *rsrq-Type*;
   4> if the UE was configured to perform measurement reporting for one or more neighbouring UTRA frequencies, include the *measResultListUTRA;*
   4> if the UE was configured to perform measurement reporting for one or more neighbouring GERAN frequencies, include the *measResultListGERAN;*
   4> if the UE was configured to perform measurement reporting for one or more neighbouring CDMA2000 frequencies, include the *measResultsCDMA2000;*
   4> if the UE was configured to perform measurement reporting, not related to NR sidelink communication, for one or more neighbouring NR frequencies, include the *measResultListNR;*
   4> for each neighbour cell included, include the optional fields that are available;
NOTE 2: The measured quantities are filtered by the L3 filter as configured in the mobility measurement configuration. The measurements are based on the time domain measurement resource restriction, if configured. Exclude-listed cells are not required to be reported.
3> if available, set the *logMeasResultListWLAN* to include the WLAN measurement results, in order of decreasing RSSI for WLAN APs;
3> if available, set the *logMeasResultListBT* to include the Bluetooth measurement results, in order of decreasing RSSI for Bluetooth beacons;
3> if detailed location information is available, set the content of the *locationInfo* as follows:
   4> include the *location Coordinates;*
   4> include the *horizontalVelocity*, if available;
3> if last RRCConnectionReconfiguration message including *mobilityControlInfo* concerned a failed intra-RAT handover (E-UTRA to E-UTRA):
   4> set the *failedPCellId* to the global cell identity, if available, and otherwise to the physical cell identity and carrier frequency of the target PCell of the failed handover;
   4> include *previousPCellld* and set it to the global cell identity of the PCell where the last *RRCConnectionReconfiguration* message including *mobilityControlInfo* was received;
   4> set the *timeConnFailure* to the elapsed time since reception of the last *RRCConnectionReconfiguration* message including the *mobilityControlInfo;*
3> else if last *MobilityFromEUTRACommand* concerned a failed inter-RAT handover from E-UTRA to NR:
   4> set the *failedNR-PCellId* to the global cell identity and tracking area code, if available, and otherwise to the physical cell identity and carrier frequency of the target PCell of the failed handover;
   4> include *previousPCellId* and set it to the global cell identity of the PCell where the last *MobilityFromEUTRACommand* message was received;
   4> set the *timeConnFailure* to the elapsed time since reception of the last *MobilityFromEUTRACommand* message;
3> set the *connectionFailureType to* '*hof*';
3> set the *c-RNTI* to the C-RNTI used in the source PCell;

In operation 7-25, the UE 7-01 may initiate an RRC connection re-establishment procedure. However, the UE 7-01 may not successfully perform the procedure but fails due to a predetermined reason. For example, the UE may operate a timer T311 when the RRC connection re-establishment procedure is initiated, but when the UE fails to select a suitable LTE cell before the timer T311 expires, the procedure may fail.

In operation 7-30, the UE 7-01 may transition to an RRC idle mode (RRC_IDLE).

In operation 7-35, the UE 7-01 may camp on an acceptable LTE cell 7-03.

In operation 7-40, the UE 7-01 may perform an RRC connection establishment procedure in order to establish an RRC connection with the acceptable LTE cell 7-03. That is, the UE 7-01 may transmit an RRC connection establishment request message (RRCConnectionRequest) to the cell 7-03. In response thereto, the cell may transmit an RRC connection establishment message (RRCConnectionSetup) to the UE in operation 7-45. In operation 7-46, the UE may transition to an RRC connected mode (RRC_CONNECTED) by applying RRCConnectionSetup. The UE may consider or determine the cell as a current PCell. In operation 7-48, the UE according to the disclosure may propose performing at least one of the proposed methods (i.e., one of the following methods or a combination of some or all of the methods) according to the following conditions.
- If radio link failure information or handover failure information is included in VarRLF-Report and a public land mobile network (registered PLMN) which the UE registers in is included in a plmn-IdentityList stored in VarRLF-Report (if the UE has radio link failure or handover failure information available in VarRLF-Report and if the RPLMN is included in plmn-IdentityList stored in VarRLF-Report), or if the UE has radio link failure information or handover failure information in VarRLF-Report and an acceptable cell is a current PCell.
   ■ If reconnectCellId is not set in VarRLF-Report after an RRC connection re-establishment procedure fails (if reconnectCellId in VarRLF-Report is not set after failing to perform reestablishment).
      ◆Method 1: The UE may set a time that elapsed from the last radio link failure or handover failure in timeUntilReconnection in VarRLF-Report (set timeUntilReconnection in VarRLF-Report to the time that elapsed since the last radio link failure or handover failure).
      ◆Method 2: Setting in timeUntilReconnection in VarRLF-Report may not be performed. Since the value is not set, network optimization may be performed by identifying that the UE has established an RRC connection with an acceptable cell when a suitable cell retrieves the VarRLF-Report from the UE in the future.
      ◆Method 3: The UE may set a time that elapsed from the last radio link failure or handover failure in new timeUntilReconnection for an acceptable cell in VarRLF-Report. Through the above, network optimization may be performed by identifying that the UE has established an RRC connection with an acceptable cell when a suitable cell retrieves the VarRLF-Report from the UE in the future.
   ■ The UE may set a global cell identity and a tracking area code of the current PCell as eutraReconnectCellId in reconnectCellId of VarRLF-Report (set eutraReconnectCellId in reconnectCellId in VarRLF-Report to the global cell identity and the tracking area code of the PCell). The UE may include, in the VarRLF-Report, an indicator indicating that the corresponding cell is an acceptable cell. Alternatively, the UE may not set any information in reconnectCellId of the VarRLF-Report. Through the above, network optimization may be performed by identifying that the UE has established an RRC connection with an acceptable cell when a suitable cell retrieves the VarRLF-Report from the UE in the future.

In relation to the above-proposed contents, a base station may control which method the UE is to apply according to a configuration. The UE may transmit an RRC connection establishment complete message (RRCConnectionSetupComplete) to the cell in operation 7-50. The UE may transmit the VarRLF-Report to the suitable cell 7-02 via a UE information procedure, and an operator that manages a suitable cell may optimize a network based on the corresponding information. For example, based on the timeUntilReconnection information, the operator may identify how much time elapsed from an RRC connection re-establishment failure until the UE having radio link failure information or handover failure information in VarRLF-Report configures an RRC connection again with a predetermined cell. Accordingly, if the corresponding time is too long, the operator may operate a network by additionally providing a new cell or optimizing existing cells. Similarly, based on the reconnectCellId, the operator may identify a cell to which the UE has subsequently connected, and this information may be used for determining whether to additionally provide a cell or to appropriately manage existing cells. In addition, if the reconnectCellId for an acceptable cell is set in VarRLF-Report, the UE may not report the corresponding information to a suitable cell. An acceptable cell does not belong to an operator which the UE subscribes to, and thus, if the UE sends reconnectCellId to a subscribed operator, it is provision of network operation information of another operator.

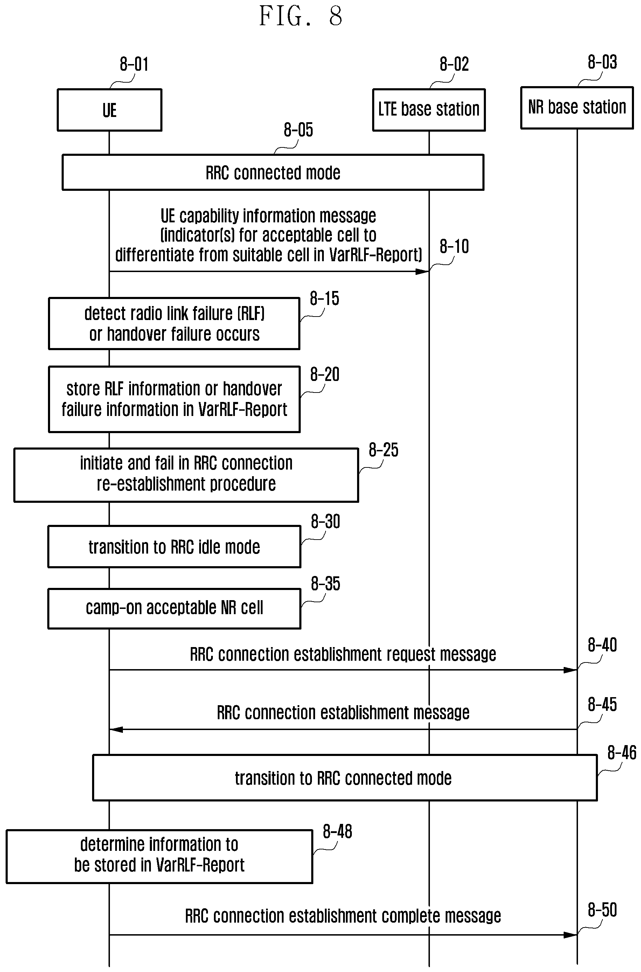

FIG. 8 is a flowchart of a process of updating radio link failure information or handover failure information in an RRC connection establishment procedure, after an RRC connection re-establishment procedure performed by a UE fails in a next generation mobile communication system according to an embodiment of the disclosure.

Referring to FIG. 8, a UE 8-01 may be in an RRC connected mode (RRC_CONNECTED) by configuring an RRC connection with an LTE base station 8-02. The LTE base station may be connected to an EPC or 5GC in operation 8-05.

In operation 8-10, the UE 8-01 may transmit a UE capability information message (UECapabilityInformation) to the base station 8-02. An indicator associated with an acceptable cell may be included in the message, and may be an indicator associated with cells different from a suitable cell of VarRLF-Report. In addition, the message may include UE capability information associated with capability of storing information different from a suitable cell of VarRLF-Report.

In operation 8-15, the UE 8-01 may detect a radio link failure (RLF) or a handover failure may occur (handover failure) due to a predetermined reason. For example, the UE may detect an RLF when a timer T310 expires for a currently connected primary cell (PCell) 8-02, or a handover failure may occur when a timer T304 expires although the UE receives an RRC message (e.g., RRCConnectionReconfiguration or MobilityFromEUTRACommand such that targetRAT-Type is set to nr) indicating handover is required from the currently connected primary cell.

In operation 8-20, the UE 8-01 may store radio link failure information (when detecting an RLF) or handover failure information (when a handover failure occurs) in VarRLF-Report. This may be the same as the above-described embodiment.

In operation 8-25, the UE 8-01 may initiate an RRC connection re-establishment procedure. However, the UE 8-01 may not successfully perform the procedure but fails due to a predetermined reason. For example, the UE may operate a timer T311 when the RRC connection re-establishment procedure is initiated, but when the UE fails to select a suitable LTE cell before the timer T311 expires, the procedure may fail.

In operation 8-30, the UE 8-01 may transition to an RRC idle mode (RRC_IDLE).

In operation 8-35, the UE 8-01 may camp on an acceptable NR cell 8-03.

In operation 8-40, the UE 8-01 may perform an RRC connection establishment procedure in order to establish an RRC connection with the acceptable NR cell 8-03. That is, the UE 8-01 may transmit an RRC connection establishment request message (RRCSetupRequest) to the cell 8-03. In response thereto, the cell may transmit an RRC connection establishment message (RRCSetup) to the UE in operation 8-45. In operation 8-46, the UE may transition to an RRC connected mode (RRC_CONNECTED) by applying RRCSetup. The UE may consider or determine the cell as a current PCell. In operation 8-48, the UE according to the disclosure may propose performing at least one of the proposed methods (i.e., one of the following methods or a combination of some or all of the methods) according to the following conditions.
- If the UE supports an RLF report for an inter-RAT MRO NR defined in the TS 36.306 standard, radio link failure information or handover failure information is included in VarRLF-Report of the TS 36.331 standard, and a public land mobile network (registered PLMN) which the UE registers in is included in plmn-IdentityList stored in the VarRLF-Report of the TS 36.331 (if the UE supports RLF report for inter-RAT MRO NR as defined in TS 36.306, and if the UE has radio link failure or handover failure information available in VarRLF-Report of TS 36.331 and if the RPLMN is included in plmn-IdentityList stored in VarRLF-Report of TS 36.331), or if the UE supports an RLF report for an inter-RAT MRO NR defined in the TS 36.306 standard, radio link failure information or handover failure information is included in the VarRLF-Report of the TS 36.331 standard, and an acceptable cell is a current PCell.
   ■ If reconnectCellId is not set in VarRLF-Report of the TS 36.331 standard after an RRC connection re-establishment procedure fails (if reconnectCellId in VarRLF-Report is not set after failing to perform reestablishment).
      ◆Method 1: The UE may set a time that elapsed from a radio link failure or a handover failure in timeUntilReconnection in VarRLF-Report of the TS 36.331 standard (set timeUntilReconnection in VarRLF-Report of TS 36.331 to the time that elapsed since the last radio link failure or handover failure).
      ◆Method 2: Setting in timeUntilReconnection in VarRLF-Report of the TS 36.331 standard may not be performed. Since the value is not set, network optimization may be performed by identifying that the UE has established an RRC connection with an acceptable cell when a suitable cell retrieves the VarRLF-Report from the UE in the future.
      ◆Method 3: The UE may set a time that elapsed from the last radio link failure or handover failure in new timeUntilReconnection for an acceptable cell in VarRLF-Report of the TS36.331 standard. Through the above, network optimization may be performed by identifying that the UE has established an RRC connection with an acceptable cell when a suitable cell retrieves the VarRLF-Report from the UE in the future.
   ■ The UE may set a global cell identity and a tracking area code of the current PCell as nrReconnectCellId in reconnectCellId of VarRLF-Report of the TS 36.331 standard (set nrReconnectCellId in reconnectCellId in VarRLF-Report of TS 36.331 to the global cell identity and the tracking area code of the PCell). The UE may include, in the VarRLF-Report, an indicator indicating that the corresponding cell is an acceptable cell. Alternatively, the UE may not set any information in reconnectCellId of the VarRLF-Report. Through the above, network optimization may be performed by identifying that the UE has established an RRC connection with an acceptable cell when a suitable cell retrieves the VarRLF-Report from the UE in the future.

In relation to the above-proposed contents, a base station may control which method the UE is to apply according to a configuration. The UE may transmit an RRC connection establishment complete message (RRCSetupComplete) to the cell in operation 8-50. The UE may transmit the VarRLF-Report to the suitable cell 8-02 via a UE information procedure, and an operator that manages a suitable cell may optimize a network based on the corresponding information. For example, based on the timeUntilReconnection information, the operator may identify how much time elapsed from an RRC connection re-establishment failure until the UE having radio link failure information or handover failure information in the VarRLF-Report configures an RRC connection again with a predetermined cell. Accordingly, if the corresponding time is too long, the operator may operate a network by additionally providing a new cell or optimizing existing cells. Similarly, based on the reconnectCellId, the operator may identify a cell to which the UE has subsequently connected, and this information may be used for determining whether to additionally provide a cell or to appropriately manage existing cells. In addition, if the reconnectCellId for an acceptable cell is set in the VarRLF-Report, the UE may not report the corresponding information to a suitable cell. An acceptable cell does not belong to an operator which the UE subscribes to, and thus, if the UE sends reconnectCellId to a subscribed operator, it is provision of network operation information of another operator.

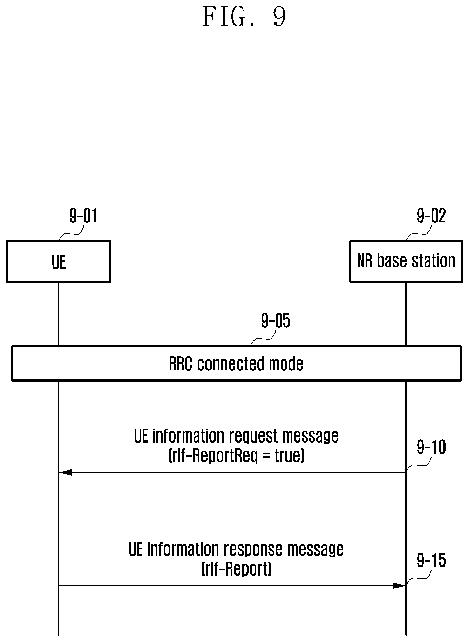

FIG. 9 is a flowchart of a process in which a UE transfers radio link failure information or handover failure information to a base station in a next generation mobile communication system according to an embodiment of the disclosure.

Referring to FIG. 9, a UE 9-01 may be in an RRC connected mode (RRC_CONNECTED) by configuring an RRC connection with an NR base station 9-02 in operation 9-05.

In operation 9-10, the base station 9-02 may transmit a UE information request message (UEInformationRequest) to the UE 9-01 for which security is successfully activated. In the message, rlf-ReportReq configured to true may be included.

In operation 9-15, when rlf-ReportReq is configured to true in the UE information request message received in operation 9-10, the UE 9-01 may perform the following procedure and may transmit a UE information response message (UEInformationResponse) to the base station 9-02.
2> if the UE has radio link failure information or handover failure information available in *VarRLF-Report* and if the RPLMN is included in *plmn-IdentityList* stored in *VarRLF-Report:*
   3> set *timeSinceFailure* in *VarRLF-Report* to the time that elapsed since the last radio link failure or handover failure in NR;
   3> set the *rlf-Report* in the *UEInformationResponse* message to the value of *rif-Report* in *VarRLF-Report;*
   3> discard the *rif-Report* from *VarRLF-Report* upon successful delivery of the *UEInformationResponse* message confirmed by lower layers;
2> else if the UE is capable of cross-RAT RLF reporting as defined in TS 38.306 and has radio link failure information or handover failure information available in *VarRLF-Report* of TS 36.331 and if the RPLMN is included in *plmn-IdentityList* stored in *VarRLF-Report* of TS 36.331 :
   3^{>} set *timeSinceFailure* in *VarRLF-Report* of TS 36.331 [10] to the time that elapsed since the last radio link failure or handover failure in EUTRA;
   3> set failedPCellId-EUTRA in the *rlf-Report* in the *UEInformationResponse* message to indicate the PCell in which RLF was detected or the source PCell of the failed handover in the *VarRLF-Report* of TS 36.331 [10];
   3> set the *measResult-RLF-Report-EUTRA* in the *rif-Report* in the *UEInformationResponse* message to the value of *rlf-Report* in *VarRLF-Report* of TS 36.331;
   3> discard the *rlf-Report* from *VarRLF-Report* of TS 36.331 upon successful delivery of the *UEInformationResponse* message confirmed by lower layers;

RLF-Report included in the UE information response message may have an ASN.1 structure as shown below. In this instance, the UE may configure RLF-Report by applying the above-described embodiment, and may include the same in the UE information response message.

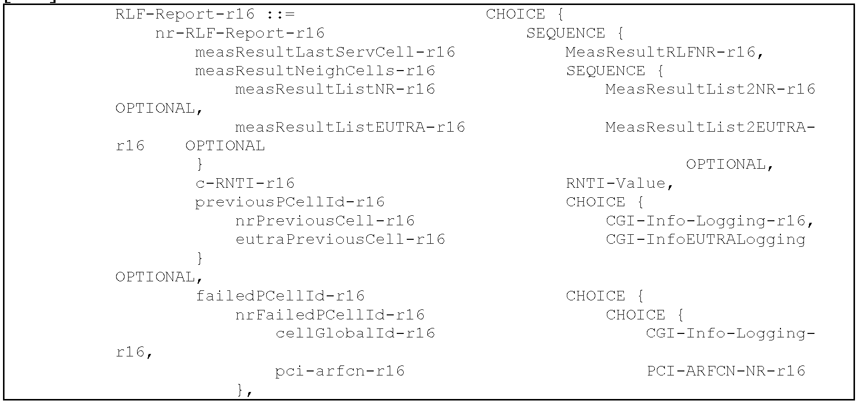

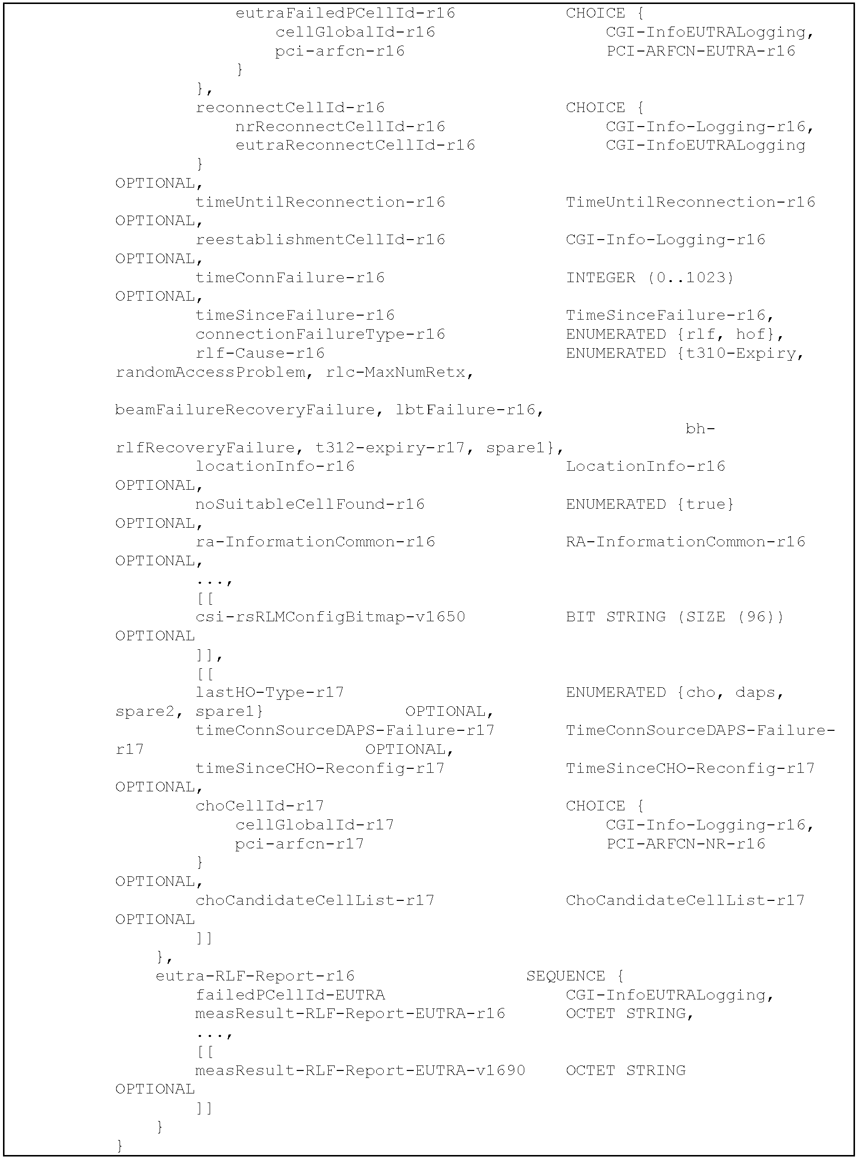

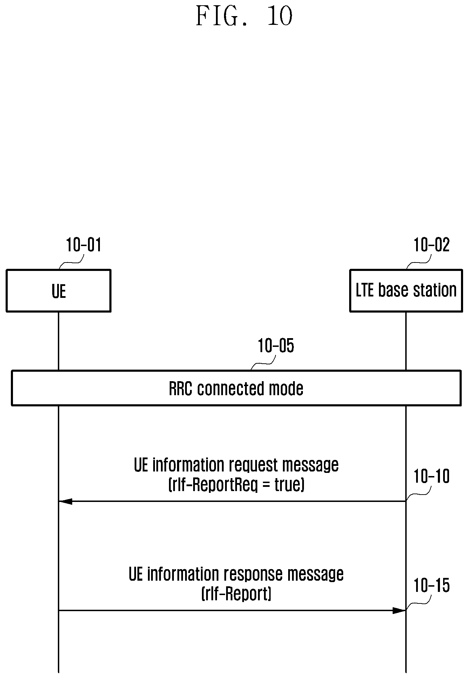

FIG. 10 is a flowchart of a process in which a UE transfers radio link failure information or handover failure information to a base station in a next generation mobile communication system according to an embodiment of the disclosure.

Referring to FIG. 10, a UE 10-01 may be in an RRC connected mode (RRC_CONNECTED) by configuring an RRC connection with an LTE base station 10-02 in operation 10-05. An LTE base station connected to an EPC may be referred to as an eNB, and an LTE base station connected to a 5GC may be referred to as an ng-eNB.

In operation 10-10, the base station 10-02 may transmit a UE information request message (UEInformationRequest) to the UE 10-01 for which security is successfully activated. In the message, rlf-ReportReq configured to true may be included.

In operation 10-15, when rlf-ReportReq is configured to true in the UE information request message received in operation 10-10, the UE 10-01 may perform the following procedure and may transmit a UE information response message (UEInformationResponse) to the base station 10-02.
1> if *rlf-ReportReq* is set to *true* and the UE has radio link failure information or handover failure information available in *VarRLF-Report* (*VarRLF-Report-NB* in NB-IoT) and if the RPLMN is included in *plmn-IdentityList* stored in *VarRLF-Report:*
   2> for NB-IoT, if the global cell identity of the selected cell is the same as the *reestablishmentCellld* in the *VarRLF-Report-NB:*
      3> remove the *reestablishmentCellld* from the *VarRLF-Report-NB;*
   2> set *timeSinceFailure* in *VarRLF-Report (VarRLF-Report-NB* in NB-IoT) to the time that elapsed since the last radio link or handover failure in E-UTRA;
   2> set the *rif-Report* in the *UEInformationResponse* message to the value of *rlf-Report* in *VarRLF-Report (VarRLF-Report-NB* in NB-IoT);
   2> discard the *rlf-Report* from *VarRLF-Report (VarRLF-Report-NB* in NB-IoT) upon successful delivery of the *UEInformationResponse* message confirmed by lower layers;

RLF-Report included in the UE information response message may have an ASN.1 structure as shown below. In this instance, the UE may configure RLF-Report by applying the above-described embodiment, and may include the same in the UE information response message.

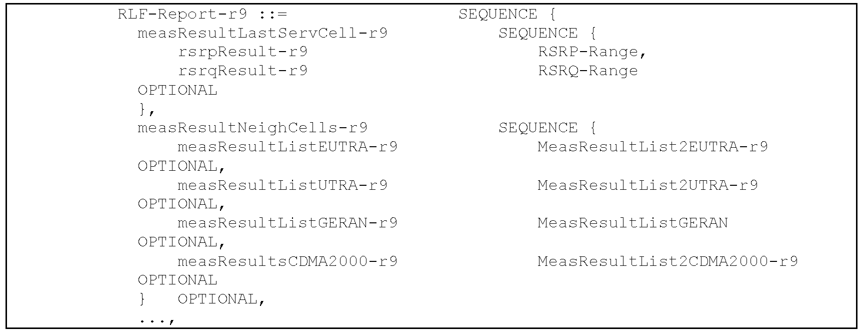

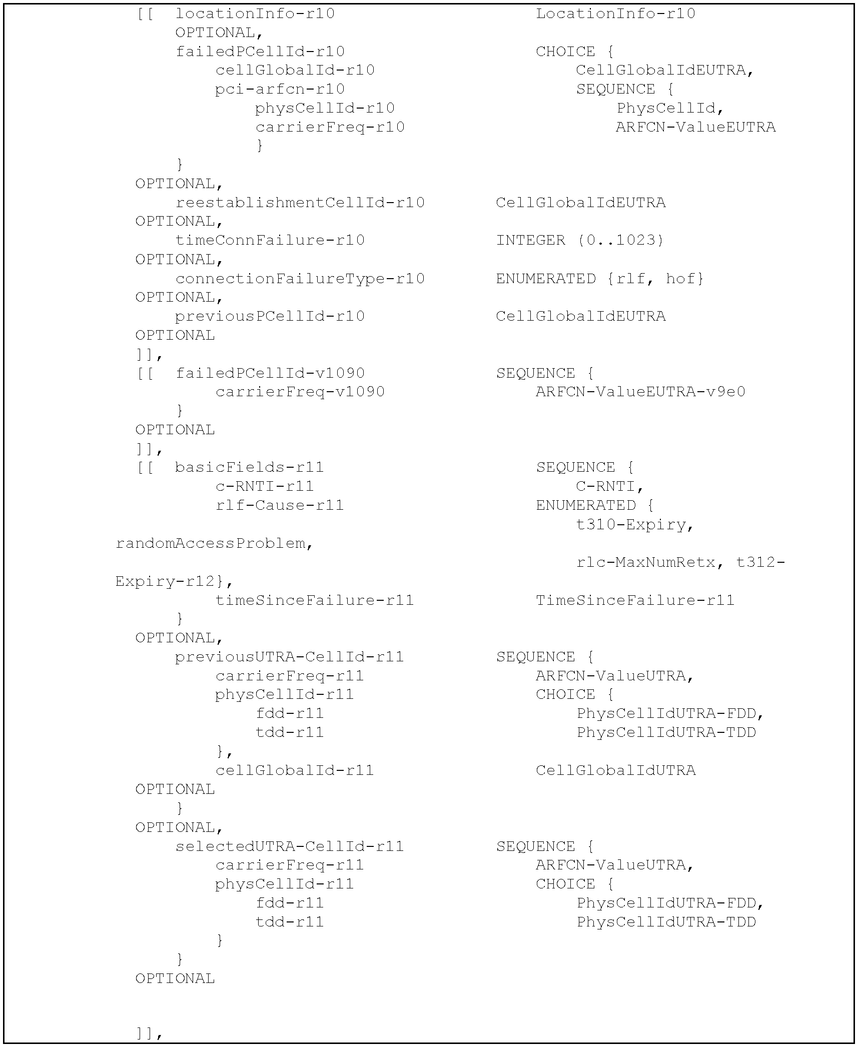

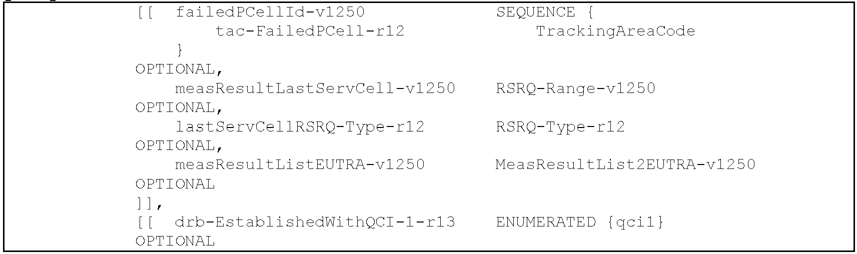

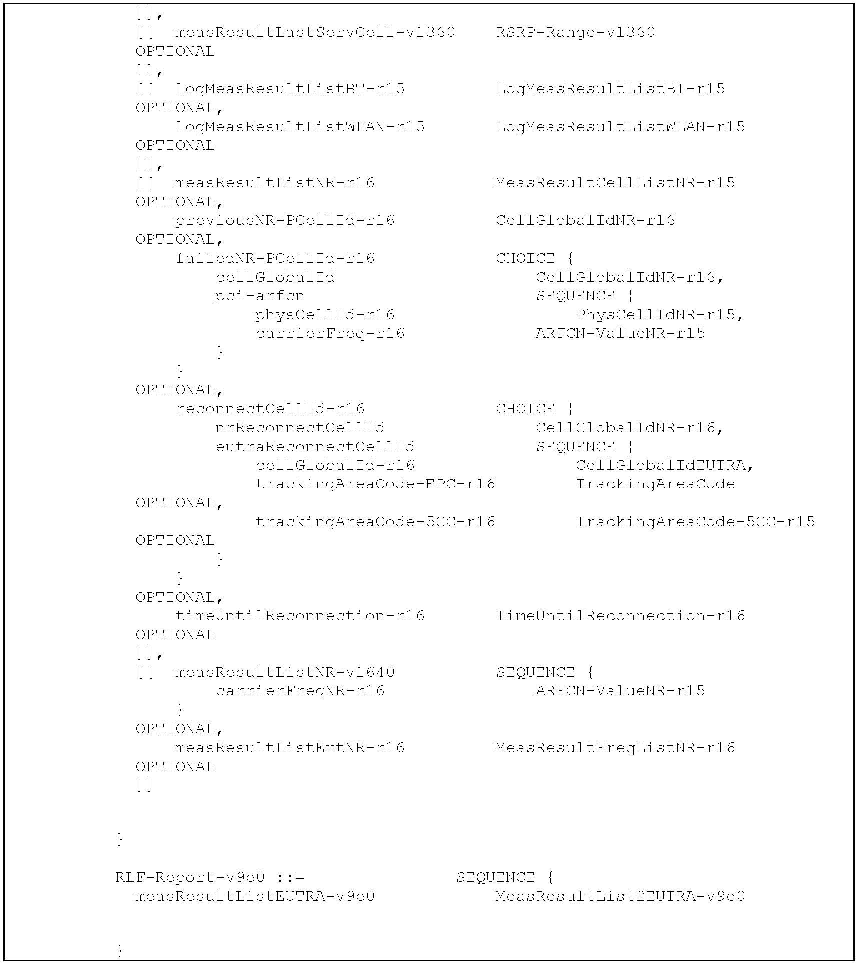

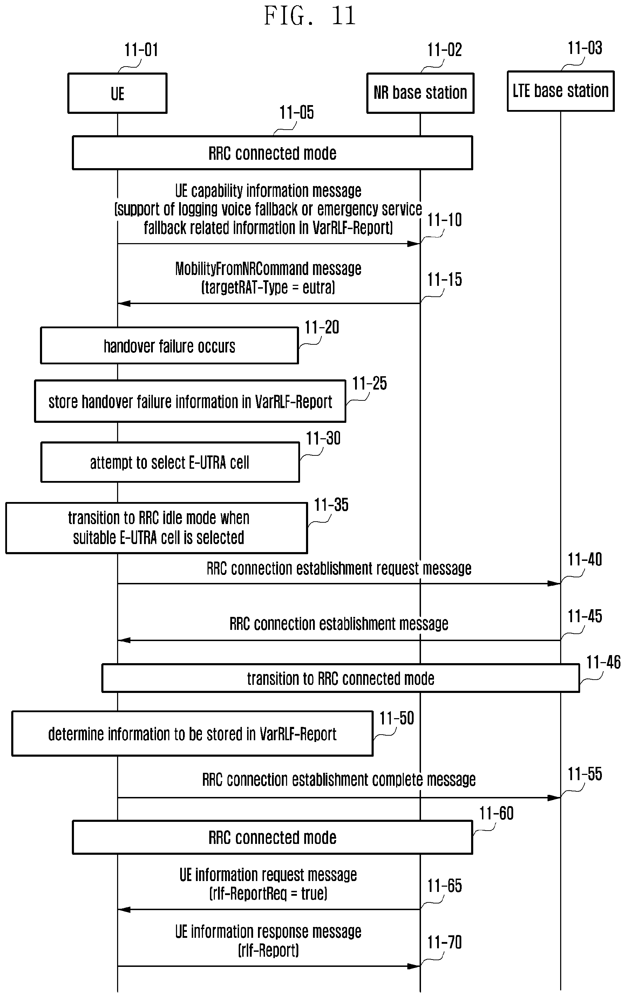

FIG. 11 is a flowchart of a process of updating radio link failure or handover failure information in an RRC connection establishment procedure, after an RRC connection re-establishment procedure performed by a UE fails in a next generation mobile communication system according to an embodiment of the disclosure.

Referring to FIG. 11, a UE 11-01 may be in an RRC connected mode (RRC_CONNECTED) by configuring an RRC connection with an NR base station 1-02.

In operation 11-10, the UE 11-01 may transmit a UE capability information message (UECapabilityInformation) to the base station 11-02. An indicator associated with an acceptable cell may be included in the message, and this may be an indicator associated with cells different from a suitable cell of VarRLF-Report. In addition, the message may include UE capability information associated with capability of storing information different from a suitable cell of VarRLF-Report. In the message, capability information associated with whether it has capability of storing information associated with a voice fallback and/or emergency service fallback in NR RLF Report.

In operation 11-15, the UE 11-01 may receive a MobilityFromNRCommand message from the base station 11-02. In the message, targetRAT-Type configured to eutra may be included. In the message, voiceFallbackIndication may be included.

In operation 11-20, the UE 11-01 may determine that a mobility from NR failure occurs due to a predetermined reason. For example, if connection to a target radio access technology is not successfully performed (if the UE does not succeed in establishing the connection to the target radio access technology), it is determined that a mobility from NR failure occurs.

In operation 11-25, if targetRAT-Type in MobilityFromNRCommand received in operation 11-15 is configured to eutra, and the UE 11-01 supports a radio link failure report for an inter-RAT MRO EUTRA (if the targetRAT-Type in the received MobilityFromNRCommand is set to eutra and the UE supports Radio Link Failure Report for Inter-RAT MRO EUTRA), the UE 11-01 may store handover failure information in the VarRLF-Report. This may be performed according to at least one of the above-described embodiments. In addition, if voiceFallbackIndication is included in MobilityFormNRCommand, or if the mobility from NR procedure is for an emergency services fallback, the UE may store an indicator indicating the same in the VarRLF-Report.

In operation 11-30, the UE 11-01 may attempt to select an E-UTRA cell. For reference, if voiceFallbackIndication is included in MobilityFormNRCommand, or if the mobility from NR procedure is for an emergency services fallback, the UE may attempt to select an E-UTRA cell.

In operation 11-35, the UE 11-01 may transition to an RRC idle mode (RRC_IDLE) when a suitable LTE cell 11-03 is selected.

In operation 11-40, the UE 11-01 may perform an RRC connection establishment procedure with the suitable LTE cell 11-03. That is, the UE may transmit an RRC connection establishment request message (RRCConnectionRequest) to the cell in operation 11-40. In response thereto, the cell may transmit an RRC connection configuration message (RRCConnectionSetup) to the UE in operation 11-45. The UE may transition to an RRC connected mode in operation 11-46, and may consider the cell a primary cell. When condition 1 is satisfied and accordingly condition 2 is satisfied, the UE may perform operation 1 in operation 11-50.

### Condition 1:

- If the UE supports an RLF report for an inter-RAT MRO EUTRA defined in the TS 38.306 standard, radio link failure information or handover failure information is included in VarRLF-Report of the TS 38.331 standard, and a public land mobile network (registered PLMN) which the UE registers in is included in plmn-IdentityList stored in the VarRLF-Report of the TS 38.331 standard (if the UE supports RLF report for inter-RAT MRO EUTRA as defined in TS 38.306, and if the UE has radio link failure or handover failure information available in VarRLF-Report of TS 38.331 and if the RPLMN is included in plmn-IdentityList stored in VarRLF-Report of TS 38.331).

### Condition 2:

- If reconnectCellId is not set in VarRLF-Report of the TS 38.331 standard, and an EPS fallback for an IMS voice is triggered via MobilityFromNRCommand or an emergenyce service fallback is triggered via MobilityFromNRCommand (if reconnectCellId in VarRLF-Report of TS 38.331 is not set, and EPS fallback for IMS voice or emergency services fallback was triggered in NR via MobilityFromNRCommand, i.e., if the operation is performed by performing operations 11-30 and 11-35).

### Operation 1:

- The UE may set a time that elapsed from a radio link failure or a handover failure in timeUntilReconnection in VarRLF-Report of the TS 38.331 standard (set timeUntilReconnection in VarRLF-Report of TS 38.331 to the time that elapsed since the last radio link failure or handover failure).
- The UE may set a global cell identity and a tracking area code of the current PCell as eutraReconnectCellId in reconnectCellId of VarRLF-Report of the TS 38.331 standard (set eutraReconnectCellId in reconnectCellId in VarRLF-Report of TS 38.331 to the global cell identity and the tracking area code of the PCell).

In operation 11-55, the UE 11-01 may transmit an RRC connection establishment complete message (RRCConnectionSetupComplete) to the cell 11-03.

In operation 11-60, the UE may be in an RRC connected mode by configuring an RRC connection with the NR base station 11-02.

In operation 11-65, the NR base station 11-02 may transmit a UE information request message (UEInformationRequest) to the UE 11-01 for which security is successfully activated. In the message, rlf-ReportReq configured to true may be included.

In operation 11-70, the UE 11-01 may transmit a UE information response message (UEInformationResponse) including RLF-Report to the NR base station 11-02. This may be performed according to the above-described embodiment.

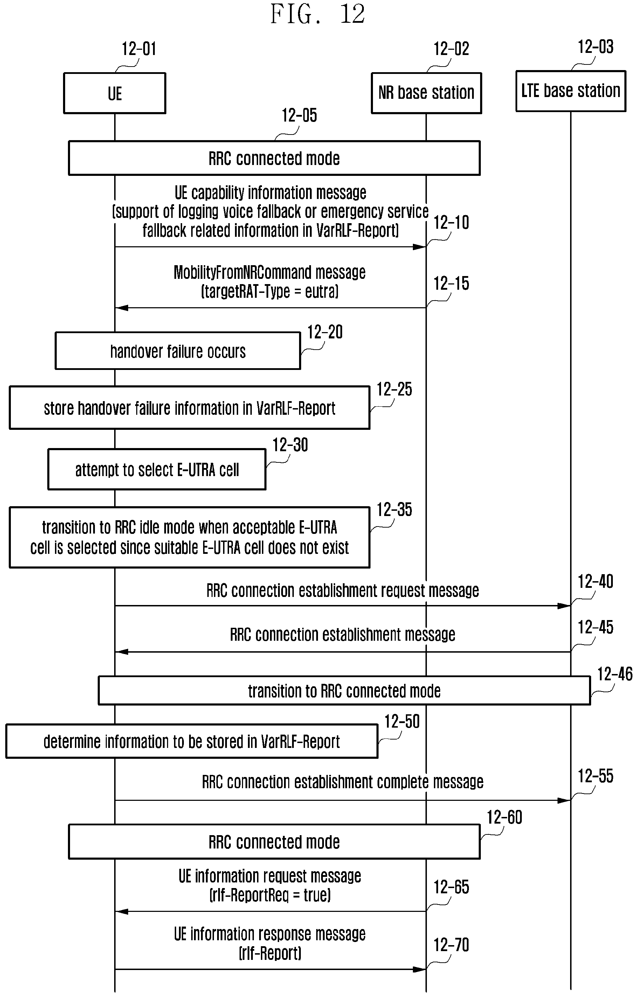

FIG. 12 is a flowchart of a process of updating radio link failure information or handover failure information in an RRC connection establishment procedure, after an RRC connection re-establishment procedure performed by a UE fails in a next generation mobile communication system according to an embodiment of the disclosure.

Referring to FIG. 12, a UE 12-01 may be in an RRC connected mode (RRC_CONNECTED) by configuring an RRC connection with an NR base station 12-02 in operation 12-05.

In operation 12-10, the UE 12-01 may transmit a UE capability information message (UECapabilityInformation) to the base station 12-02. This may be performed according to the above-described embodiment.

In operation 12-15, the UE 12-01 may receive a MobilityFromNRCommand message from the base station 12-02. In the message, targetRAT-Type may be configured to eutra. In the message, voiceFallbackIndication may be included.

In operation 12-20, the UE 12-01 may determine that a mobility from NR failure occurs due to a predetermined reason. For example, if connection to a target radio access technology is not successfully performed (if the UE does not succeed in establishing the connection to the target radio access technology), it is determined that a mobility from NR failure occurs.

In operation 12-25, if targetRAT-Type in MobilityFromNRCommand received in operation 12-15 is configured to eutra, and the UE 12-01 supports a radio link failure report for an inter-RAT MRO EUTRA (if the targetRAT-Type in the received MobilityFromNRCommand is set to eutra and the UE supports Radio Link Failure Report for Inter-RAT MRO EUTRA), the UE 11-01 may store handover failure information in VarRLF-Report. This may be performed according to at least one of the above-described embodiments. In addition, if voiceFallbackIndication is included in MobilityFormNRCommand, or if the mobility from NR procedure is for an emergency services fallback, the UE may store an indicator indicating the same in the VarRLF-Report.

In operation 12-30, the UE 12-01 may attempt to select an E-UTRA cell. For reference, if voiceFallbackIndication is included in MobilityFormNRCommand, or if the mobility from NR procedure is for an emergency services fallback, the UE may attempt to select an E-UTRA cell.

In operation 12-35, if a suitable LTE cell does not exist and an acceptable cell 12-03 supporting an emergency call is selected when an ongoing emergency call exists (if no suitable E-UTRA cell is available and an acceptable E-UTRA cell supporting emergency call is selected when the UE has an ongoing emergency call), the UE 12-01 may transition to an RRC idle mode (RRC_IDLE).

In operation 12-40, the UE 12-01 may perform an RRC connection establishment procedure with the acceptable LTE cell 12-03. That is, the UE may transmit an RRC connection establishment request message (RRCConnectionRequest) to the cell in operation 12-40. In response thereto, the cell may transmit an RRC connection configuration message (RRCConnectionSetup) to the UE in operation 12-45. The UE may transition to an RRC connected mode in operation 12-46, and may consider the cell a primary cell. In this instance, the UE may not store any information in the VarRLF-Report. Through the above, when the base station retrieves an RLF-Report from the UE later, the base station may recognize that the UE selects an acceptable E-UTRA cell that supports an emergency call in the case in which timeUntilReconnection and reconnectCellId do not exist and voiceFallbackIndication is included in MobilityFormNRCommand, or in the case in which an indicator indicating that a mobility from NR procedure is for an emergency services fallback is included in the RLF-Report. Alternatively, when condition 1 is satisfied and accordingly condition 2 is satisfied, the UE may perform operation 1 in operation 12-50.

### Condition 1:

- If the UE supports an RLF report for an inter-RAT MRO EUTRA defined in the TS 38.306 standard, radio link failure information or handover failure information is included in VarRLF-Report of the TS 38.331 standard, and a public land mobile network (registered PLMN) which the UE registers in is included in plmn-IdentityList stored in the VarRLF-Report of the TS 38.331 (if the UE supports RLF report for inter-RAT MRO EUTRA as defined in TS 38.306, and if the UE has radio link failure or handover failure information available in VarRLF-Report of TS 38.331 and if the RPLMN is included in plmn-IdentityList stored in VarRLF-Report of TS 38.331), or if the UE supports an RLF report for an inter-RAT MRO EUTRA defined in the TS 38.306 standard, and radio link failure information or handover failure information is included in VarRLF-Report of the TS 38.331 standard.

### Condition 2:

- If reconnectCellId is not set in VarRLF-Report of the TS 38.331 standard, and an EPS fallback for an IMS voice is triggered via MobilityFromNRCommand or an emergenyce service fallback is triggered via MobilityFromNRCommand (if reconnectCellId in VarRLF-Report of TS 38.331 is not set, and EPS fallback for IMS voice or emergency services fallback was triggered in NR via MobilityFromNRCommand, i.e., if the operation is performed by performing operations 12-30 and 12-35), or if an EPS fallback for an IMS voice is triggered via MobilityFromNRCommand or an emergenyce service fallback is triggered via MobilityFromNRCommand.

### Operation 1:

- The UE may set a time that elapsed from a radio link failure or a handover failure in timeUntilReconnection in VarRLF-Report of the TS 38.331 standard (set timeUntilReconnection in VarRLF-Report of TS 38.331 to the time that elapsed since the last radio link failure or handover failure). For reference, the timeUntilReconnection may be a new field.

For reference, whether to perform operation 1 or whether to not store any information in the VarRLF-Report may be determined based on a configuration by a base station.

In operation 12-55, the UE 12-01 may transmit an RRC connection establishment complete message (RRCConnectionSetupComplete) to the cell 12-03.

In operation 12-60, the UE may be in an RRC connected mode by configuring an RRC connection with the NR base station 12-02.

In operation 12-65, the NR base station 12-02 may transmit a UE information request message (UEInformationRequest) to the UE 12-01 for which security is successfully activated. In the message, rlf-ReportReq configured to true may be included.

In operation 12-70, the UE 12-01 may transmit a UE information response message (UEInformationResponse) including RLF-Report to the NR base station 12-02. This may be performed according to the above-described embodiment.

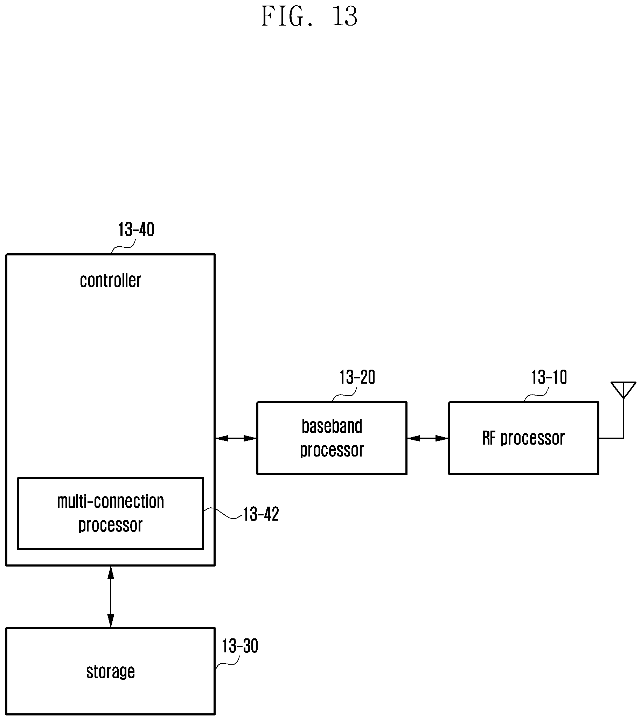

FIG. 13 is a block diagram of the internal structure of a UE according to an embodiment of the disclosure.

Referring to the drawing, the UE includes a radio frequency (RF) processor 13-10, a baseband processor 13-20, a storage 13-30, and a controller 13-40.

The RF processor 13-10 performs a function for signal transmission or reception via a wireless channel, such as signal band conversion, amplification or the like. That is, the RF processor 13-10 up-converts a baseband signal provided from the baseband processor 13-20 into an RF band signal so as to transmit the RF band signal via an antenna, and down-converts an RF band signal received via the antenna into a baseband signal. For example, the RF processor 13-10 may include a transmission filter, a reception filter, an amplifier, a mixer, an oscillator, a digital-to-analog converter (DAC), an analog-to-digital converter (ADC), and the like. Although only a single antenna is illustrated in the drawing, the UE may include a plurality of antennas. In addition, the RF processor 13-10 may include a plurality of RF chains. Moreover, the RF processor 13-10 may perform beamforming. For the beamforming, the RF processor 13-10 may control the phase and the size of each of the signals transmitted or received via a plurality of antennas or antenna elements. In addition, the RF processor may perform MIMO, and may receive multiple layers when performing a MIMO operation.

The baseband processor 13-20 executes a function of conversion between a baseband signal and a bitstream according to the physical layer standard of a system. For example, in the case of data transmission, the baseband processor 13-20 encodes and modulates a transmission bitstream, so as to produce complex symbols. In addition, in the case of data reception, the baseband processor 13-20 restores a reception bitstream by demodulating and decoding a baseband signal provided from the RF processor 13-10. For example, according to an orthogonal frequency division multiplexing (OFDM) scheme, in the case of data transmission, the baseband processor 13-20 produces complex symbols by encoding and modulating a transmission bitstream, maps the complex symbols to subcarriers, and then perform an inverse fast Fourier transform (IFFT) operation and cyclic prefix (CP) insertion so as to configure OFDM symbols. In addition, in the case of data reception, the baseband processor 13-20 divides a baseband signal provided from the RF processor 13-10 in units of OFDM symbols, reconstructs signals mapped to subcarriers via a fast Fourier transform (FFT), and then perform demodulation and decoding so as to reconstruct a reception bitstream

The baseband processor 13-20 and the RF processor 13-10 transmit and receive signals as described above. Accordingly, the baseband processor 13-20 and the RF processor 13-10 may be referred to as a transmitter, a receiver, a transceiver, or a communication unit. Furthermore, at least one of the baseband processor 13-20 and the RF processor 13-10 may include a plurality of communication modules in order to support different multiple radio access technologies. In addition, at least one of the baseband processor 13-20 and the RF processor 13-10 may include different communication modules to process signals of different frequency bands. For example, the different radio access technologies may include a wireless LAN (e.g., IEEE 802.11), a cellular network (e.g., LTE), and the like. In addition, the different frequency bands may include a super high frequency (SHF) (e.g., 2.NRHz, NRhz) band and a millimeter (mm) wave (e.g., 60 GHz) band.

The storage 13-30 may store data such as a basic program, an application program, and configuration information for the operation of the UE. Particularly, the storage 13-30 may store information related to a second access node that performs wireless communication using a second radio access technology. In addition, the storage 13-30 may provide data stored therein according to a request of the controller 13-40.

The controller 13-40 may control the overall operation of the UE. For example, the controller 13-40 may perform signal transmission or reception via the baseband processor 13-20 and the RF processor 13-10. In addition, the controller 13-40 may record and read data in the storage 13-40. To this end, the controller 13-40 may include at least one processor. For example, the controller 13-40 may include a communication processor (CP) that performs control for communication, and an application processor (AP) that controls an upper layer such as an application program.

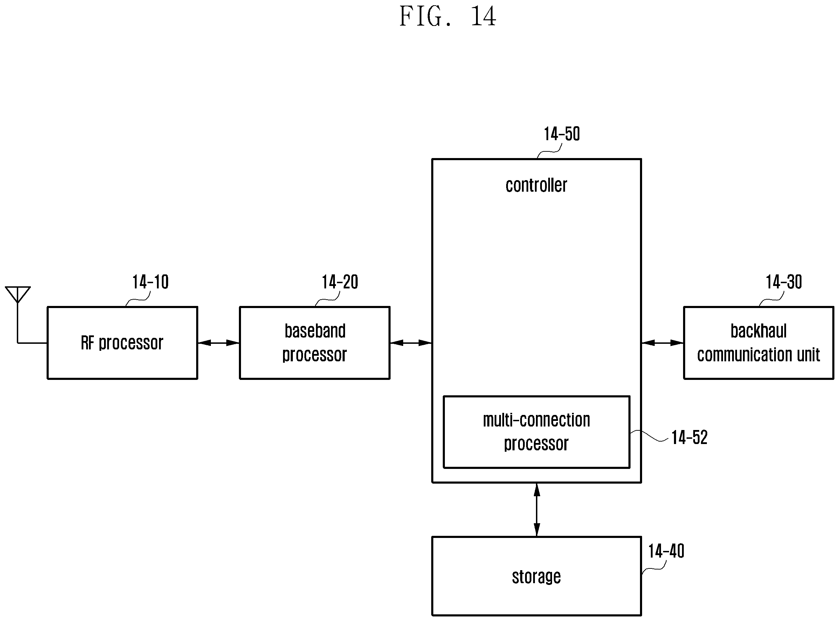

FIG. 14 is a block diagram illustrating the configuration of an NR base station according to an embodiment.

As illustrated in the drawing, the base station may include an RF processor 14-10, a baseband processor 14-20, a backhaul communication unit 14-30, a storage 14-40, and a controller 14-50.

The RF processor 14-10 performs a function for signal transmission or reception via a wireless channel, such as signal band conversion, amplification, or the like. That is, the RF processor 14-10 up-converts a baseband signal provided from the baseband processor 14-20 into an RF band signal so as to transmit the RF band signal via an antenna, and down-converts an RF band signal received via the antenna into a baseband signal. For example, the RF processor 14-10 may include a transmission filter, a reception filter, an amplifier, a mixer, an oscillator, a DAC, an ADC, and the like. Although only a single antenna is illustrated in the drawing, the first access node may include a plurality of antennas. In addition, the RF processor 14-10 may include a plurality of RF chains. Moreover, the RF processor 14-10 may perform beamforming. For the beamforming, the RF processor 14-10 may control the phase and the size of each of the signals transmitted or received via a plurality of antennas or antenna elements. The RF processor may perform a downlink MIMO operation by transmitting one or more layers.

The baseband processor 14-20 performs a function for conversion between a baseband signal and a bitstream according to the physical layer standard of a first radio access technology. For example, in the case of data transmission, the baseband processor 14-20 encodes and modulates a transmission bitstream, so as to produce complex symbols. In addition, in the case of data reception, the baseband processor 14-20 restores a reception bitstream by demodulating and decoding a baseband signal provided from the RF processor 14-10. For example, according to the OFDM scheme, in the case of data transmission, the baseband processor 14-20 may produce complex symbols by encoding and modulating a transmission bitstream, map the complex symbols to subcarriers, and then perform an IFFT operation and CP insertion so as to configure OFDM symbols. In addition, in the case of data reception, the baseband processor 14-20 divides a baseband signal provided from the RF processor 14-10 in units of OFDM symbols, restores signals mapped onto the subcarriers via the FFT operation, and performs demodulation and decoding so as to restore a reception bitstream. The baseband processor 14-20 and the RF processor 14-10 transmit and receive signals as described above. Accordingly, the baseband processor 14-20 and the RF processor 14-10 may be referred to as a transmitter, a receiver, a transceiver, a communication unit, or a wireless communication unit.

The backhaul communication unit 14-30 may provide an interface for performing communication with other nodes in a network. That is, the backhaul communication unit 14-30 may convert, into a physical signal, a bitstream transmitted from the primary base station to another node, for example, a secondary base station, a core network, and the like, and may convert a physical signal received from the other node into a bitstream.

The storage 14-40 stores data such as a basic program, an application program, and configuration information for the operation of the primary base station. Particularly, the storage 14-40 may store information associated with a bearer allocated to a connected UE, a measurement result reported from a connected UE, and the like. In addition, the storage 14-40 may store information which is a criterion for determining whether to provide multiple accesses to a UE or stop providing the same. In addition, the storage 14-40 may provide data stored therein according to a request of the controller 14-50.

The controller 14-50 may control the overall operation of the primary base station. For example, the controller 14-50 may perform signal transmission or reception via the baseband processor 14-20 and the RF processor 14-10, or via the backhaul communication unit 14-30. In addition, the controller 14-50 may record and read data in the storage 14-40. To this end, the controller 14-50 may include at least one processor.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. It will be apparent to those skilled in the art that, in addition to the embodiments set forth herein, other variants based on the technical idea of the disclosure may be implemented.

## Claims

1. An operation method of a terminal in a wireless communication system, the method comprising:
receiving, from an NR base station, a handover-from-NR command message including information in which a target radio access technology (RAT) is configured to LTE;
in case that a failure of a handover from NR is detected, selecting a suitable LTE cell in case that an available suitable LTE cell exists and selecting an acceptable LTE cell in case that an available suitable LTE cell does not exist;
entering an RRC idle mode;
performing an RRC connection establishment procedure with respect to the selected LTE cell;
in case that the LTE cell to which the RRC connection is performed is a suitable LTE cell, storing a time value from the handover failure to reconnection and an ID of the LTE cell to which the RRC connection is performed in VarRLF-Report associated with the NR; and
in case that the LTE cell to which the RRC connection is performed is an acceptable LTE cell, storing a time value from the handover failure to reconnection in the VarRLF-Report associated with the NR.

2. The method of claim 1, wherein, in case that the LTE cell to which the RRC connection is performed is an acceptable LTE cell, the ID of the LTE cell to which the RRC connection is performed is not stored in the VarRLF-Report associated with the NR.

3. The method of claim 1, wherein the handover-from-NR command message comprises an indicator for a voice fallback.

4. The method of claim 3, further comprising storing, in the VarRLF-Report associated with the NR, information indicating that the handover is for a voice fallback.

5. The method of claim 1, wherein the storing of the time value from the handover failure to the reconnection or the ID of the LTE cell to which the RRC connection is performed in the VarRLF-Report associated with the NR is performed in case that an ID of an LTE cell is not stored in the VarRLF-Report associated with the NR.

6. The method of claim 1, wherein the terminal is a terminal that supports an inter-RAT RLF report.

7. The method of claim 1, further comprising:
establishing an RRC connection with the NR base station after updating the VarRLF-Report associated with the NR in relation to the selected LTE cell;
receiving a terminal information request message from the NR base station; and
transmitting, to the NR base station, a terminal information response message comprising the VarRLF-Report associated with the NR.

8. A terminal that operates in a wireless communication system, the terminal comprising:
a transceiver; and
a controller,
wherein the controller is configured to:
receive, from an NR base station, a handover-from-NR command message comprising information in which a target radio access technology (RAT) is configured to LTE;
in case that a failure of a handover from NR is detected, select a suitable LTE cell in case that an available suitable LTE cell exists and select an acceptable LTE cell in case that an available suitable LTE cell does not exist;
enter an RRC idle mode;
perform an RRC connection establishment procedure with respect to the selected LTE cell;
in case that the LTE cell to which the RRC connection is performed is a suitable LTE cell, store a time value from the handover failure to reconnection and an ID of the LTE cell to which the RRC connection is performed in VarRLF-Report associated with the NR; and
in case that the LTE cell to which the RRC connection is performed is an acceptable LTE cell, store a time value from the handover failure to reconnection in the VarRLF-Report associated with the NR.

9. The terminal of claim 8, wherein the controller is configured to, in case that the LTE cell to which the RRC connection is performed is an acceptable LTE cell, omit to store the ID of the LTE cell to which the RRC connection is performed in the VarRLF-Report associated with the NR.

10. The terminal of claim 8, wherein the handover-from-NR command message comprises an indicator for a voice fallback.

11. The terminal of claim 10, wherein the controller is further configured to store, in the VarRLF-Report associated with the NR, information indicating that the handover is for a voice fallback.

12. The terminal of claim 8, wherein the controller is further configured to perform storing of the time value from the handover failure to the reconnection or the ID of the LTE cell to which the RRC connection is performed in the VarRLF-Report associated with the NR, in case that an ID of an LTE cell is not stored in the VarRLF-Report associated with the NR.

13. The terminal of claim 8, wherein the terminal is a terminal that supports an inter-RAT RLF report.

14. The terminal of claim 8, wherein the controller is further configured to:
establish an RRC connection to the NR base station after updating the VarRLF-Report associated with the NR in relation to the selected LTE cell;
receive a terminal information request message from the NR base station; and
transmit, to the NR base station, a terminal information response message comprising the VarRLF-Report associated with the NR.
